(19) Europäisches Patentamt European Patent Office Office européen des brevets

(11) **EP 4 672 733 A1**

(12) **EUROPEAN PATENT APPLICATION**

(43) Date of publication:
**31.12.2025 Bulletin 2026/01**

(21) Application number: 25174377.9

(22) Date of filing: **06.05.2025**

(51) International Patent Classification (IPC):
*H04N 7/14* (2006.01)

(52) Cooperative Patent Classification (CPC):
**G06V 10/26; G06T 11/60; H04N 7/147; H04N 7/15;**
G06T 2210/62

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **27.06.2024 US 202418755961**

(71) Applicant: **Intel Corporation
Santa Clara, CA 95054 (US)**

(72) Inventors:
• **Bugdary, Shlomi**
  **75351 53 Rishon LeZion (IL)**
• **Matichin, Hava**
  **4906445 Petah Tikva (IL)**
• **Zatzarinni, Rony**
  **4642736 Tel Aviv (IL)**
• **Barber, Dor**
  **4632821 Herzliya (IL)**

(74) Representative: **Goddar, Heinz J.
Boehmert & Boehmert
Anwaltspartnerschaft mbB
Pettenkoferstrasse 22
80336 München (DE)**

(54) **LOW POWER CONTENT TRANSPARENCY CONTROL**

(57) Content transparency control implemented on a central processing unit, or a graphics processing unit to post-process live video content requires direct access to double data rate memory and can demand significant amounts of power. A solution addresses this issue by exploiting temporal noise reduction hardware and software already included in an image signal processor. The temporal noise reduction hardware and software are modified to support content transparency control in tandem with temporal noise reduction. Specifically, the feedback weight map and the output weight map used in temporal noise reduction to blend an input image and a retrieved reference image can be controlled based on a semantic map to effectuate content transparency control.

**FIG. 1A**

**Description**

<u>Background</u>

Video conferencing and video broadcast or streaming involves capturing a video using a camera at one location. In some cases, the video is transmitted over the Internet to a different location to be displayed to an end user. In some cases, the video is broadcast over the Internet to be displayed to many end users at many different locations.

<u>Brief Description of the Drawings</u>

Embodiments will be readily understood by the following detailed description in conjunction with the accompanying drawings. To facilitate this description, like reference numerals designate like structural elements. Embodiments are illustrated by way of example, and not by way of limitation, in the figures of the accompanying drawings.

FIG. 1A illustrates an output image with translucent person overlay, according to some embodiments of the disclosure.
FIG. 1B illustrates an output image with translucent person overlay, according to some embodiments of the disclosure.
FIG. 2A illustrates an input image, according to some embodiments of the disclosure.
FIG. 2B illustrates an output image with a subject erased, according to some embodiments of the disclosure.
FIG. 3 illustrates a system having a camera, an image signal processor, a processor, and a display device, according to some embodiments of the disclosure.
FIG. 4 illustrates content transparency control combined with temporal noise reduction, according to some embodiments of the disclosure.
FIG. 5A illustrates an exemplary segmentation map, according to some embodiments of the disclosure.
FIG. 5B illustrates an exemplary segmentation map, according to some embodiments of the disclosure.
FIG. 6 illustrates blending using combined weight maps, according to some embodiments of the disclosure.
FIG. 7 illustrates a translucent person overlay application, according to some embodiments of the disclosure.
FIG. 8 illustrates an erasure application, according to some embodiments of the disclosure.
FIG. 9 illustrates a post-occlusion filter application, according to some embodiments of the disclosure.
FIG. 10 is a flowchart showing a method for content transparency control, according to some embodiments of the disclosure.
FIG. 11 is a block diagram of an exemplary computing device, according to some embodiments of the disclosure.

<u>Detailed Description</u>

*Overview*

Content transparency control (CTC) is an image processing technique that allows adjustment of opacity levels of objects or persons within an image or a video. CTC can be useful in scenarios where certain objects or persons are de-emphasized or made less visible. CTC can be useful in scenarios where certain objects or persons are to be erased from the scene. By manipulating the opacity of pixels, the pixels can be blended seamlessly with the background or other content in the scene. CTC can enhance the overall composition and viewer experience.

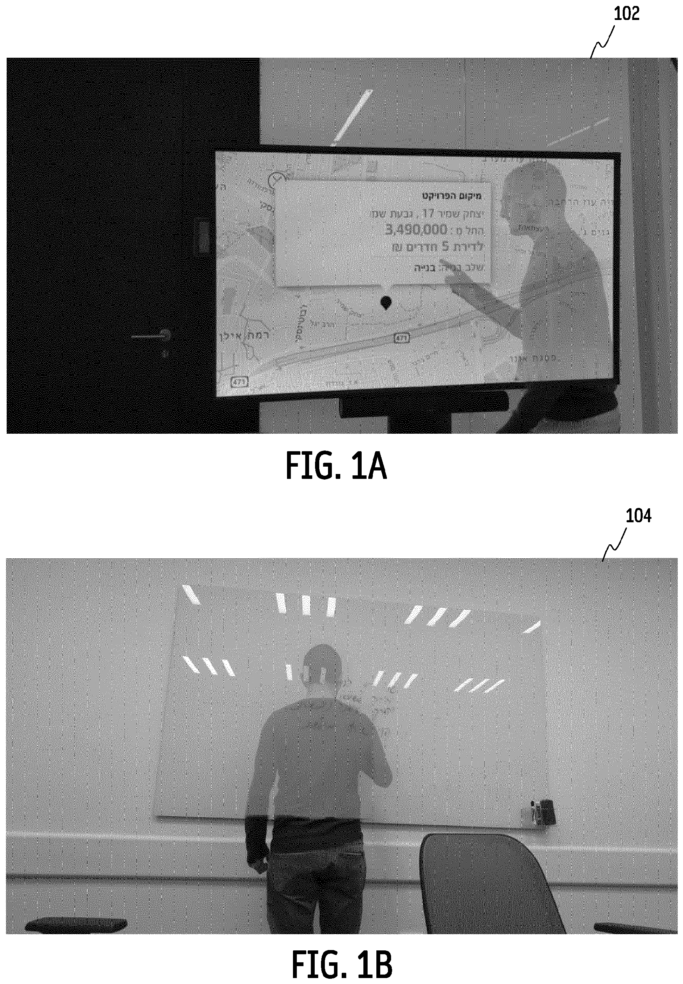

FIG. 1A illustrates output image 102 with translucent person overlay, according to some embodiments of the disclosure. In the scene, a person is standing in front of a television. With CTC, the region where the person occludes the television is made translucent to maintain visibility of the person and not obscure the content on the television.

FIG. 1B illustrates output image 104 with translucent person overlay, according to some embodiments of the disclosure. In the scene, a person is writing on a whiteboard and is in front of a television. With CTC, the region where the person occludes the whiteboard is made translucent to maintain visibility of the person and not obscure the content on the whiteboard.

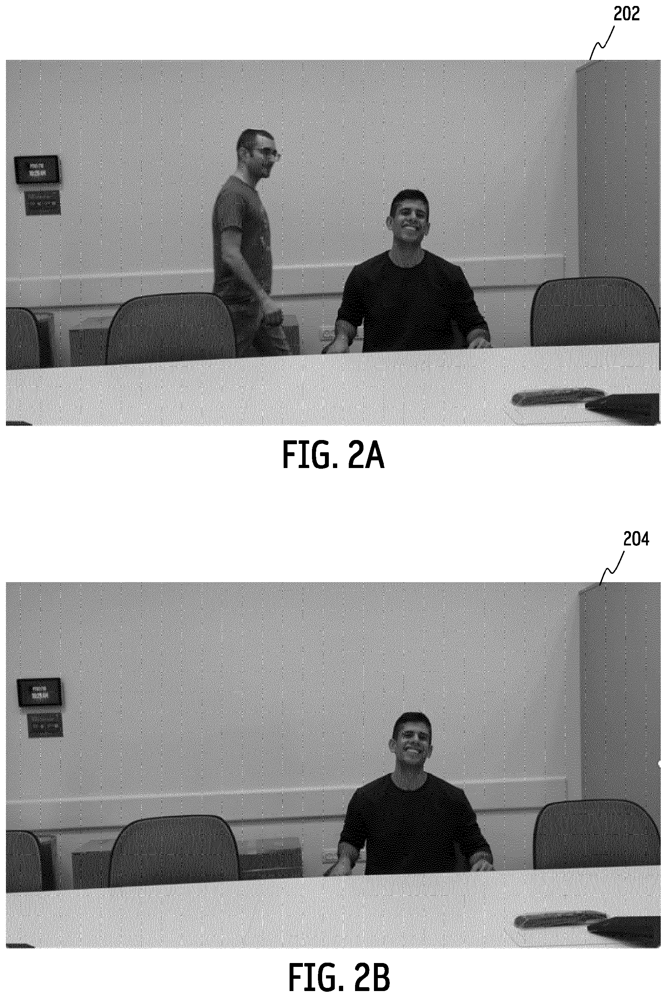

FIG. 2A illustrates input image 202, according to some embodiments of the disclosure. In the scene, a main subject is seated, while a passerby subject is walking towards the main subject. FIG. 2B illustrates output image 204 with a subject erased, according to some embodiments of the disclosure. The passerby subject (potentially a nuisance) is erased, and the background having the wall and the cabinet is displayed in place of the passerby subject.

CTC can revolutionize live video editing by seamlessly erasing or adjusting content transparency. As illustrated by FIG. 1B, teachers can enhance educational videos, ensuring both the teachers' visibility and the readability of whiteboard text. Professionals can protect the privacy of others during remote meetings by erasing family members, as illustrated by FIGS. 2A-B. In live broadcasts, CTC can swiftly remove distractions or unwanted content to preserve the main subject's presentation integrity, as illustrated by FIGS. 2A-B. CTC can be used by landscape photographers to remove moving objects such as cars, from videos, to ensure a visually pristine outcome.

Implementing CTC capabilities demands significant system resources, including reading and writing images to double data rate (DDR) memory, downscaling, executing segmentation algorithms to isolate various objects, and blending images. In one power hungry solution, CTC is implemented in post-processing. In one implementation, CTC implemented in post-processing can consume 800-1500mW (milliwatts) to process a 2MP (Megapixels) image. In the realm of video conferencing, where immediate, real-time performance is paramount, CTC may be executed by a central processing unit (CPU), a graphics processing unit (GPU), other powerful processing hardware, to maintain uninterrupted video flow. CTC implemented on a CPU or a GPU to post-process live video content may require direct access to DDR memory for reading and writing operations. CTC is characterized by high CPU/GPU usage, which demands significant amounts of power during operation. Some of these requirements and limitations can pose a challenge for certain resource and power constrained systems.

A solution addresses this issue by exploiting temporal noise reduction (TNR) hardware and software already included in an image signal processor (ISP). An ISP may include a TNR component, which is used to reduce or filter out temporal noise. Temporal noise may appear as flickering or graininess in video. TNR may analyze consecutive images in a video and apply spatial and/or temporal filters to reduce noise. TNR may generate a reference image, which is sent to the DDR, and an output image based on a retrieved reference image retrieved from the DDR. The output image may be output to a video application for display on a display device. The input image may be recursively added to the reference image to reduce noise in the reference image. The output image is recursively denoised by averaging the input image with a retrieved reference image.

The generation of the reference image is done by blending an input image and a retrieved reference image according to a feedback weight map. In some cases, the blending is further performed with a spatially filtered input image. The feedback weight map can give different weights to the input image, the retrieved reference image, and the spatially filtered input image (if included). The weights in the feedback weight map control how much contribution a pixel in the input image, the same pixel in the retrieved reference image, and the same pixel in the spatially filtered input image (if included) contributes to the reference image.

The generation of the output image is also done by blending the input image and the retrieved reference image according to an output weight map. In some cases, the blending is further performed with a spatially filtered input image. The output weight map can give different weights to the input image, the retrieved reference image, and the spatially filtered input image (if included). The weights in the output weight map control how much contribution a pixel in the input image, the same pixel in the retrieved reference image, and the same pixel in the spatially filtered input image (if included) contributes to the output image.

The feedback weight map and the output weight map may utilize different weight values for different regions of the image. The feedback weight map and the output weight map may utilize different weight values depending on the amount of motion in a region. The feedback weight map and the output weight map may utilize different weight values depending on one or more user preferences.

The TNR hardware and software are modified to support CTC in tandem with TNR. Specifically, the feedback weight map and the output weight map used in TNR to blend an input image and a retrieved reference image can be controlled based on a semantic map to effectuate CTC and other related applications.

According to one aspect, the feedback weight map and the output weight map used for TNR purposes can be merged with a feedback weight map and an output weight map generated for CTC purposes to form a combined feedback weight map and a combined output weight map. The combined feedback weight map can be used to generate a reference image. The combined output weight map can be used to generate an output image.

The modifications of the feedback weight map and the output weight map do not necessarily impact the temporal and spatial filtering functions. Temporal and spatial filtering functions of TNR may continue to occur alongside with CTC for at least some, if not all regions of the image. A CTC-specific feedback weight map can be combined or merged with a TNR-specific feedback weight map to form a combined feedback weight map. A CTC-specific output weight map can be combined or merged with a TNR-specific output weight map to form a combined output weight map. The combined feedback weight map and the combined output weight map are then used to produce the reference image and the output image.

According to one aspect, the feedback weight map and the output weight map are determined based on the desired CTC application, such as an application mode selected by a user via the video application, or an application mode indicated by the video application. Examples of application modes may include translucent person overlay (in front of whiteboard, blackboard, display, poster, salient content, etc.), nuisance removal or erasure, privacy protection, censoring, background freeze (or virtual background), content inpainting, etc. Depending on the application, the feedback weight map and the output weight map may be controlled to create a desired visual effect for the application.

According to one aspect, a segmentation algorithm running on a CPU, GPU, or other suitable processor, may operate on the input image and produce the segmentation map. The segmentation algorithm may in some cases already be running for other applications. The segmentation map may include pixels or contiguous regions, each assigned to one or more semantic classifications. The segmentation map may be processed based on the application mode to identify one or more regions of interest where controlling one or more of the feedback weight map and the output weight map may create a desired visual effect.

According to one aspect, the feedback weight map may be controlled to save/maintain the background as the reference image, even when the background is occluded. The background, saved as the reference image, can be used for blending with the input image. The background, saved as the reference image, can be used as an estimate of the background. The background saved as the reference image may also be a temporally denoised reference, which can be used in post-occlusion scenarios.

According to one aspect, the output weight map may be controlled to adjust the transparency of foreground subjects in the scene. Lowering the weight corresponding to the input image in the output weight map for an overlap region, e.g., a region where a foreground subject overlaps with a background object of interest, can have the effect of making the foreground subject appear translucent while the background object of interest remains visible. Lowering the weight further corresponding to the input image in the output weight map for an erasure region, e.g., a region where a foreground subject is to be erased, can have the effect of making the foreground subject disappear while the background is shown in the erasure region.

The resulting solution implemented on the ISP is flexible and can be adaptable for a wide range of applications. The resulting solution produces high quality output video while being highly efficient in terms of power, bandwidth, and compute costs. The modifications made to the temporal noise reduction hardware adds negligible hardware area (e.g., <0.01mm). In comparison to a CTC solution implemented in post-processing, CTC implemented on the ISP consumes far less power (e.g., less than 1mW to process a 2MP image). At the same time, CPU/GPU usage can be decreased by eliminating some operations such as read/write images to the DDR, downscaling, and image blending from post-processing. The CTC solution implemented on the ISP can achieve high speed, low power, and real-time performances.

In some embodiments, the resulting solution implemented on the ISP protects privacy by removing private content (e.g., family members, persons who did not consent to be recorded, etc.) at the ISP rather than at the third-party, potentially uncontrolled video application running on the CPU or in the cloud. The private content would not be passed to the third-party video application.

*A system with content transparency control*

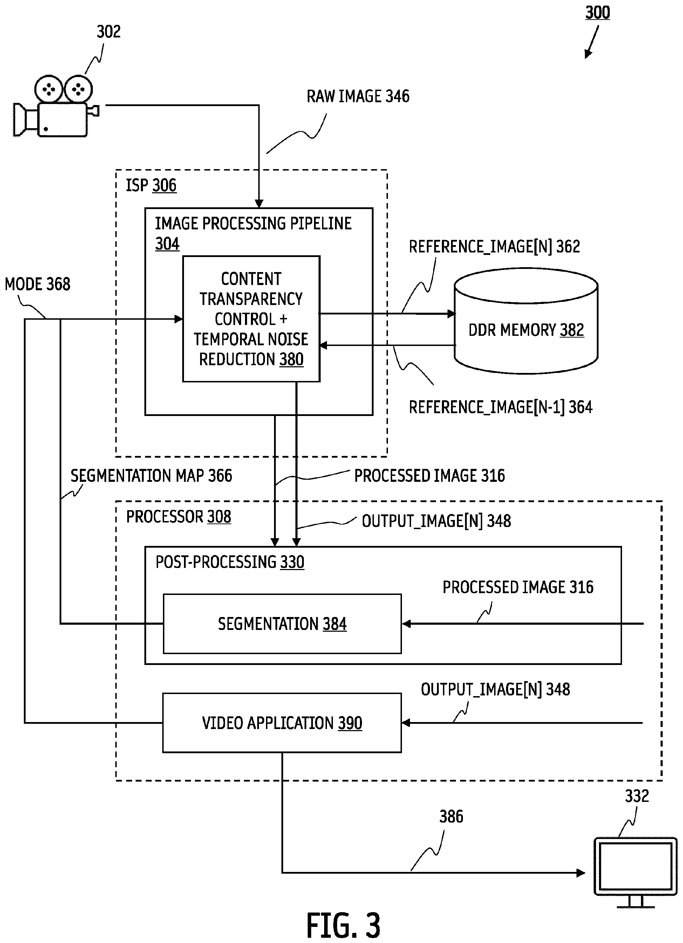

FIG. 3 illustrates system 300 having camera 302, ISP 306, processor 308, and a display device 332, according to some embodiments of the disclosure. Camera 302 may include an image sensor to capture a scene. A scene may include a background, and a foreground. A scene may include one or more subjects. A scene may include one or more objects. Camera 302 may include circuitry to convert signals from the image sensor into one or more raw images. The temporal sequence of raw images may form a video. A video may include images captured by camera 302 at a number of frames per second (e.g., 24 frames per second, 30 frames per second, etc.).

ISP 306 may be communicably coupled with camera 302 to receive one or more raw images, one of which is shown as raw image 346. ISP 306 may include processing circuitry designed specifically for low latency, real-time image processing. ISP 306 may implement image processing pipeline 304. ISP 306 may include, or have direct access to, DDR memory 382 dedicated to store the raw images and processed images produced by image processing pipeline 304. Image processing pipeline 304 may include operations on the raw images, such as denoising, filtering, artifact removal, image enhancement, distortion removal, blurring, sharpening, etc. For clarity, some of the operations are not shown. Image processing pipeline 304 may receive raw image 346 and produce processed image 316. Processed image 316 may be provided to processor 308.

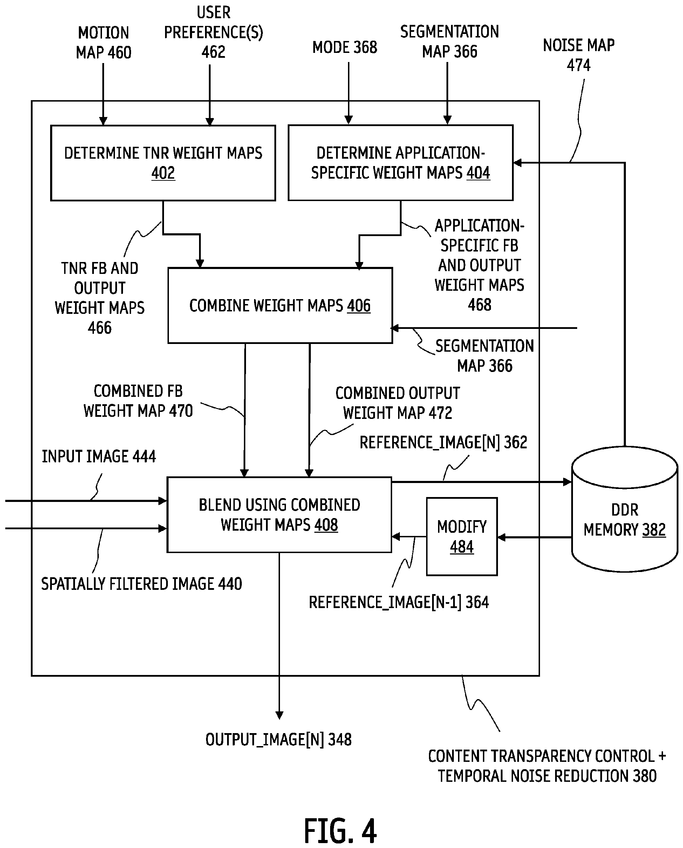

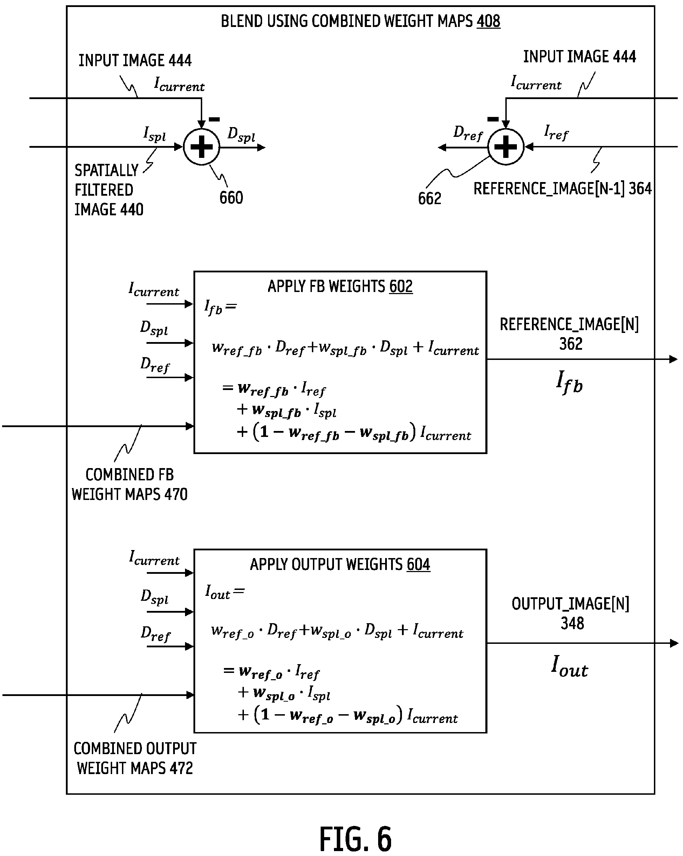

Image processing pipeline 304 may include content transparency control and temporal noise reduction 380. Details relating to content transparency control and temporal noise reduction 380 are described in FIGS. 4 and 6. Content transparency control and temporal noise reduction 380 may access DDR memory 382 to read/retrieve one or more reference images, one of which is shown as REFERENCE_IMAGE[N-1] 364. The retrieved reference image, REFERENCE_IMAGE[N-1] 364, may be used in content transparency control and temporal noise reduction 380 to generate a reference image, REFERENCE_IMAGE[N] 362. Content transparency control and temporal noise reduction 380 may access DDR memory 382 to write the reference image REFERENCE_IMAGE[N] 362 to memory. The retrieved reference image, REFERENCE_IMAGE[N-1] 364, may be used in content transparency control and temporal noise reduction 380 to generate an output image, OUTPUT_IMAGE[N] 348. The output image, OUTPUT_IMAGE[N] 348, may be provided to processor 308.

Processor 308 may include one or more of: a CPU, a GPU, a machine learning processor, an artificial intelligence processor, a neural network processor, an artificial intelligence accelerator, an application-specific integrated circuit (ASIC), a microprocessor, a, a field programmable gate array (FPGA), a tensor processing unit (TPU), and a data processing unit (DPU).

Processor 308 may include video application 390 executing on processor 308. Video application 390 may include a user-facing video application, such as a video conferencing application, a video editing application, a video player, a video sharing application, virtual reality application, augmented reality application, mixed reality application, gaming application, etc. Video application 390 may receive OUTPUT_IMAGE[N] 348, and video application 390 may generate a suitable graphical user interface display image 386 based on OUTPUT_IMAGE[N] 348. Video application 390 may cause graphical user interface display image 386 to be output or rendered for display to one or more users using display device 332. Display device 332 may display graphical user interface display image 386 to one or more users.

In some embodiments, video application 390 may receive user input indicating an application mode for CTC. A user may select or specify an application mode via video application 390. Mode 368 having information about the application mode for CTC may be provided by video application 390 to content transparency control + temporal noise reduction 380.

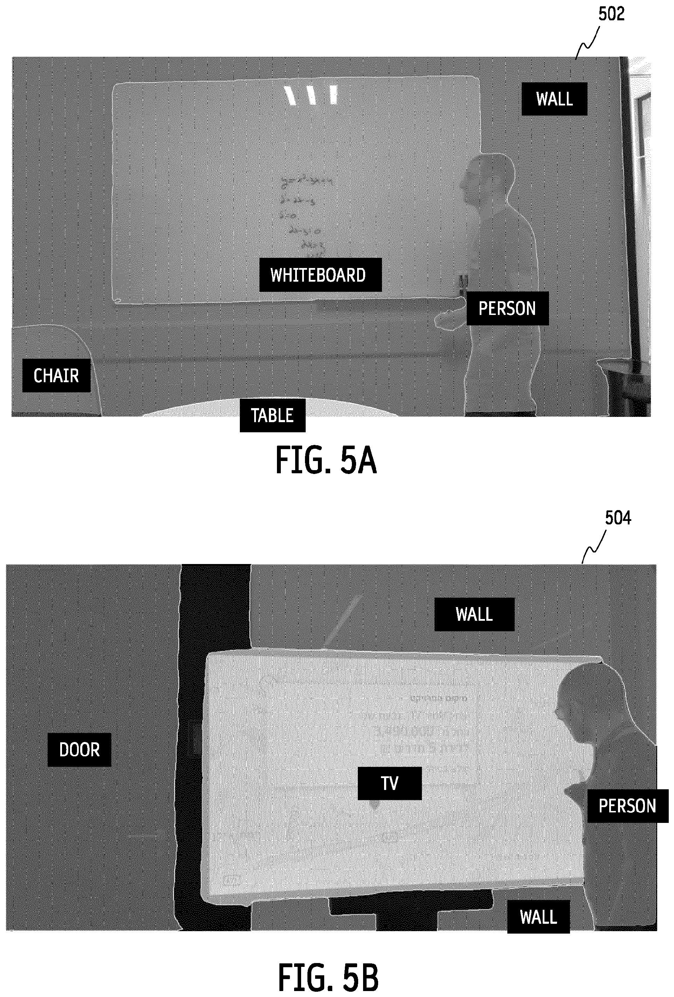

Processor 308 may implement post-processing 330 executing on processor 308. Post-processing 330 may include additional image processing operations on processed image 316. The additional image processing operations performed by post-processing 330 may be specific for supporting video application 390. For example, post-processing 330 may include segmentation 384. Segmentation 384 may receive processed image 316 capturing a scene from image processing pipeline 304. Segmentation 384 can implement one or more techniques, such as thresholding, edge detection, region growing, clustering, or deep learning-based semantic segmentation techniques, to analyze processed image 316 and identify distinct objects or regions within the scene or object. Segmentation 384 generates segmentation map 366 based on processed image 316. Segmentation map 366 may have pixels that correspond to the pixels of processed image 316. Each pixel of segmentation map 366 is assigned a unique label or semantic classification corresponding to a specific object or region identified within the scene or object. Segmentation map 366 may be provided by segmentation 384 to content transparency control + temporal noise reduction 380. Exemplary segmentation maps are illustrated in FIGS. 5A-5B.

In some cases, ISP 306 may be physically collocated with camera 302 as part of a same electronic system that includes camera 302 and ISP 306. In some cases, ISP 306 may be physically collocated with processor 308 as part of a same computing system (e.g., both as part of a system-on-chip package, both provided on the same motherboard of a computing system, etc.).

FIG. 4 illustrates content transparency control combined with temporal noise reduction, according to some embodiments of the disclosure. Content transparency control and temporal noise reduction 380 may include determine TNR weight maps 402, determine application-specific weight maps 404, combine weight maps 406, and blend using combined weight maps 408.

Determine application-specific weight maps 404 can determine a first feedback weight map and/or a first output weight map based on segmentation map 366. Specifically, determine application-specific weight maps 404 may assign weight values to locations in the first feedback weight map and/or the first output weight map based on corresponding pixels in the segmentation map 366. The first feedback weight map and/or the first output weight map may be a part of application-specific feedback and output weight maps 468. Segmentation map 366 may include first pixels each assigned to one or more semantic classifications. Exemplary segmentation maps are illustrated in FIGS. 5A-5B.

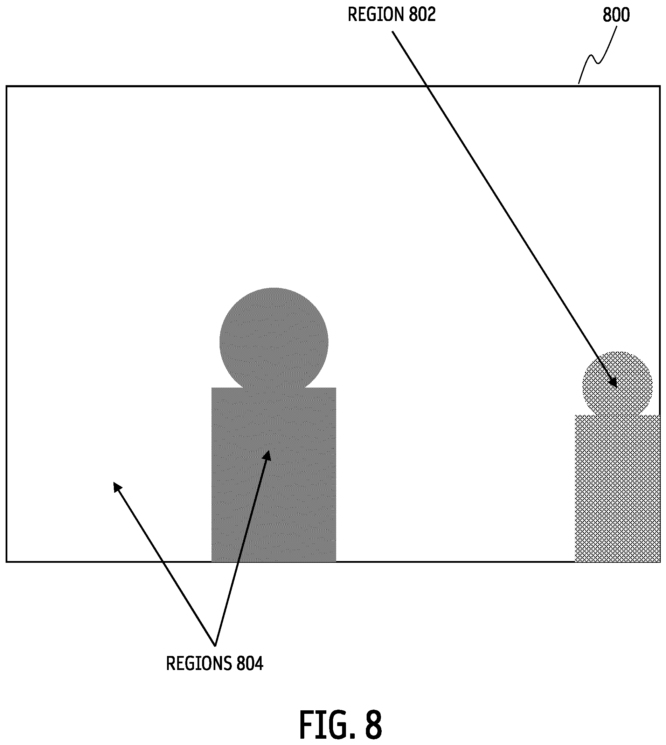

Determine application-specific weight maps 404 may determine the first feedback weight map and/or the first output weight map further based on an application mode selected by a user via the video application or an application mode indicated by the video application. The application mode may be signaled in mode 368. The application mode may give information about one or more regions of interest in segmentation map 366 whose blending weights may be adjusted to create a desired effect for the application mode. Examples of different application modes are described with FIGS. 8-9. Determine application-specific weight maps 404 may determine the first feedback weight map and/or the first output weight map further based on the one or more regions of interest. Specifically, determine application-specific weight maps 404 may assign specific weight values to locations in the first feedback weight map and/or the first output weight map for those regions of interest.

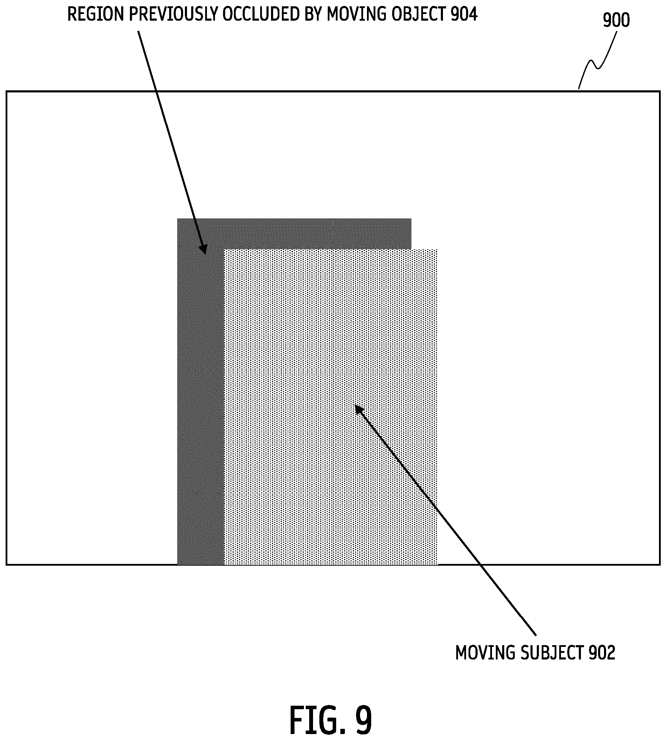

In some embodiments, determine application-specific weight maps 404 may determine the first feedback weight map and/or the first output weight map further based on a noise map 474. Noise map 474 may include pixels each having a numerical indicator of the level of noise at the pixel. Noise map 474 may include pixels each having a count of how many times the pixel has been recursively averaged. A low count may suggest that a high amount of temporal noise may be present. A high count may suggest that a low amount of temporal noise may be present. An exemplary use of noise map 474 is discussed with FIG. 9.

Determine TNR weight maps 402 may determine a second feedback weight map and/or a second output weight map based on one or more of: motion map 460 and one or more user preferences 462. The second feedback weight map and/or the second output weight map may be a part of TNR feedback and output weight maps 466. Determine TNR weight maps 402 may determine the second feedback weight map and/or the second output weight map to achieve one or more of: temporal averaging or blending, motion-adaptive temporal filtering, motion-compensated temporal filtering, and spatial-temporal averaging or filtering. In some embodiments, determine TNR weight maps 402 may assign weight values to locations in the second feedback weight map and/or the second output weight map based on corresponding pixels in motion map 460. Determine TNR weight maps 402 may set specific weight values to locations in the second feedback weight map and/or the second output weight map based on a level of motion indicated by the corresponding pixels in motion map 460. In some embodiments, determine TNR weight maps 402 may assign weight values to locations in the second feedback weight map and/or the second output weight map based on one or more user preference(s) 462. Determine TNR weight maps 402 may set specific weight values in the second feedback weight map and/or the second output weight map based on the amount of temporal and/or spatial-temporal filtering desired by the user, as indicated in one or more user preferences 462. Determine TNR weight maps 402 may set specific weight values in the second feedback weight map and/or the second output weight map based on whether the scene has low light, as indicated in one or more user preferences 462. Determine TNR weight maps 402 may set specific weight values in the second feedback weight map and/or the second output weight map based on whether high amount of noise is expected, as indicated in one or more user preferences 462. Determine TNR weight maps 402 may set specific weight values in the second feedback weight map and/or the second output weight map based on whether artifacts are tolerated, as indicated in one or more user preferences 462.

In some embodiments, combine weight maps 406 receives one or more of: TNR feedback and output weight maps 466 and/or application-specific feedback and output weight maps 468. In some cases, combine weight maps 406 may perform a selection function on weight values at a particular pixel location between TNR feedback and output weight maps 466 and/or application-specific feedback and output weight maps 468 to produce combined feedback weight map 470 and/or combined output weight map 472. In some cases, combine weight maps 406 may perform a gating or multiplexing function to make the selection. The gating or multiplexing function may be based on one or more factors. The one or more factors may in some cases be different depending on the pixel location. The one or more factors may be different depending on the application mode. The one or more factors may be different depending on one or more user preferences. In some cases, combine weight maps 406 apply logic or a mathematical operation to determine weight values at a particular pixel location in combined feedback weight map 470 and/or combined output weight map 472 based on weight values at the same particular pixel location in TNR feedback and output weight maps 466 and/or application-specific feedback and output weight maps 468.

Combine weight maps 406 may produce combined feedback weight map 470. Combine weight maps 406 may apply logic to combine one or more weight values at a particular pixel location of the first feedback weight map with one or more weight values at the same pixel location of the second feedback weight map to produce one or more weight values at the same pixel location of the combined feedback weight map. The combined feedback weight map 470 may include weight values from the first feedback weight map at some pixel locations, and weight values from the second feedback weight map at some pixel locations. In some cases, one or more weight values from the first feedback weight map at a pixel location and one or more weight values from the second feedback weight map at the same pixel location may be merged to form the one or more weight values at the same pixel location in the combined feedback weight map 470.

Combine weight maps 406 may produce combined output weight map 472. Combine weight maps 406 may apply logic to combine one or more weight values at a particular pixel location of the first output weight map with one or more weight values at the same pixel location of the second output weight map to produce one or more weight values at the same pixel location of the combined output weight map. The combined output weight map 472 may include weight values from the first output weight map at some pixel locations, and weight values from the second output weight map at some pixel locations. In some cases, one or more weight values from the first output weight map at a pixel location and one or more weight values from the second output weight map at the same pixel location may be merged to form the one or more weight values at the same pixel location in the combined output weight map 472.

In some embodiments, combine weight maps 406 may determine whether one or more weight values at a particular location in the first feedback weight map and/or the first output weight map in application-specific feedback and output weight maps 468 meets one or more conditions. In response to the one or more weight values meeting the one or more conditions, the one or more weight values from the first feedback weight map and/or the first output weight map may be used as the one or more weight values in the combined output weight map based on segmentation map 366 (thus ignoring or overriding one or more weight values in the second feedback weight map and/or the second output weight map in TNR feedback and output weight maps).

In some embodiments, combine weight maps 406 may apply logic to select one or more weight values from one of the two weight maps being combined (e.g., the first feedback weight map and the second feedback weight map, and the first output weight map and the second output weight map) to be used as the one or more weight values in the combined output weight map based on segmentation map 366 (thus ignoring or overriding one or more weight values in one of the two weight maps).

In some embodiments, combine weight maps 406 may assign default weight values in the combined output weight map if one or more weight values are not available in the weight maps being combined. In some embodiments, combine weight maps 406 may assign default weight values in the combined output weight map if one or more weight values in the weight maps being combined are invalid.

In some embodiments, determine TNR weight maps 402, determine application-specific weight maps 404, and combine weight maps 406 may be implemented as one module or component to determine combined feedback weight map 470 and combined output weight map 472. The module may receive one or more of: motion map 460, one or more user preferences 462, mode 368, segmentation map 366, and noise map 474. The module may determine combined feedback weight map 470 and combined output weight map 472 to perform one or more functions, such as TNR and CTC. The module may determine combined feedback weight map 470 and combined output weight map 472 based on one or more of: motion map 460, one or more user preferences 462, mode 368, segmentation map 366, and noise map 474.

Blend using combined weight maps 408 may receive combined feedback weight map 470 and combined output weight map 472. Combined feedback weight map 470 may be used by blend using combined weight maps 408 to produce a reference image (REFERENCE_IMAGE[N] 362). Combined output weight map 472 may be used by blend using combined weight maps 408 to produce an output image (OUTPUT_IMAGE[N] 348). Blend using combined weight maps 408 may perform recursive filtering using weight values provided in combined feedback weight map 470 and combined output weight map 472. Additional details relating to blend using combined weight maps 408 are described with FIG. 6.

Blend using combined weight maps 408 may generate a reference image (REFERENCE_IMAGE[N] 362) based on input image 444 and a retrieved reference image (REFERENCE_IMAGE[N-1] 364). Blend using combined weight maps 408 may generate the reference image (REFERENCE_IMAGE[N] 362) based on the first feedback weight map in application-specific feedback and output weight maps 468. Blend using combined weight maps 408 may generate the reference image (REFERENCE_IMAGE[N] 362) based on the second feedback weight map in TNR feedback and output weight maps 466. Blend using combined weight maps 408 may generate the reference image (REFERENCE_IMAGE[N] 362) based on the first feedback weight map in application-specific feedback and output weight maps 468 and the second feedback weight map in TNR feedback and output weight maps 466.

Blend using combined weight maps may retrieve the retrieved reference image (REFERENCE_IMAGE[N-1] 364) from a memory (e.g., DDR memory 382). Blend using combined weight maps 408 may write the reference image (REFERENCE_IMAGE[N] 362) to a memory (e.g., DDR memory 382). The memory may store one or more latest reference images produced by blend using combined weight maps 408.

Blend using combined weight maps 408 may generate an output image (OUTPUT_IMAGE[N] 348) based on input image 444 and the retrieved reference image (REFERENCE_IMAGE[N-1] 364). Blend using combined weight maps 408 may generate the output image (OUTPUT_IMAGE[N] 348) based on the first output weight map in application-specific feedback and output weight maps 468. Blend using combined weight maps 408 may generate the output image (OUTPUT_IMAGE[N] 348) based on the second output weight map in TNR feedback and output weight maps 466. Blend using combined weight maps 408 may generate the output image (OUTPUT_IMAGE[N] 348) based on the first output weight map in application-specific feedback and output weight maps 468 and the second output weight map in TNR feedback and output weight maps 466.

Input image 444 may be a raw image as captured by a camera (e.g., camera 302 of FIG. 3). Input image 444 may be a filtered image from a component in image processing pipeline 304 of FIG. 3. Input image 444 may have temporal noise. Input image 444 may have spatial noise.

In some cases, blend using combined weight maps 408 may generate the reference image (REFERENCE_IMAGE[N] 362) further based on spatially filtered image 440. In some cases, blend using combined weight maps 408 may generate the output image (OUTPUT_IMAGE[N] 348) further based on spatially filtered image 440. Spatially filtered image 440 (or spatially filtered input image) may be a filtered version of input image 444, where a spatial or 2-dimensional filter may be applied to input image 444 to produce spatially filtered image 440. The spatial or 2-dimensional filter may remove spatial noise from input image 444.

Blend using combined weight maps 408 may output the output image (OUTPUT_IMAGE[N] 348). Blend using combined weight maps 408 may output the output image (OUTPUT_IMAGE[N] 348) to a video application (e.g., video application 390 of FIG. 3) for display on a display device (e.g., display device 332 of FIG. 3). Blend using combined weight maps 408 may output the output image (OUTPUT_IMAGE[N] 348) to a component in image processing pipeline 304 of FIG. 3 for further processing.

In some embodiments, the first feedback weight map in application-specific feedback and output weight maps 468 comprises second pixels each having one or more feedback weight values. The one or more feedback weight values at a pixel location can be used to blend one or more pixels of the pixel location to form a pixel of the reference image (REFERENCE_IMAGE[N-1] 364) at the same pixel location. The one or more feedback weight values can include a first feedback weight value corresponding to the retrieved reference image (e.g., REFERENCE_IMAGE[N-1] 364). The one or more feedback weight values can include a second weight value corresponding to input image 444. In some cases, the one or more feedback weight values can include a third weight value corresponding to spatially filtered image 440.

In some embodiments, the first output weight map in application-specific feedback and output weight maps 468 comprises third pixels each having one or more output weight values. The one or more output weight values at a pixel location can be used to blend one or more pixels of the pixel location to form a pixel of the output image (OUTPUT_IMAGE[N] 348) at the same pixel location. The one or more output weight values can include a first output weight value corresponding to the retrieved reference image (e.g., REFERENCE_IMAGE[N-1] 364). The one or more output weight values can include a second output weight value corresponding to input image 444. In some cases, the one or more output weight values can include a third output weight value corresponding to spatially filtered image 440.

In some embodiments, the second feedback weight map in TNR feedback and output weight maps 466 may include fourth pixels each having one or more further feedback weight values. The one or more further feedback weight values at a pixel location can be used to blend one or more pixels of the pixel location to form a pixel of the reference image (REFERENCE_IMAGE[N-1] 364) at the same pixel location. The one or more further feedback weight values can include a fourth feedback weight value corresponding to the retrieved reference image (e.g., REFERENCE_IMAGE[N-1] 364). The one or more further feedback weight values can include a fifth feedback weight value corresponding to input image 444. The one or more further feedback weight values can include a sixth feedback weight value corresponding to spatially filtered image 440.

In some embodiments, the second output weight map in TNR feedback and output weight maps 466 may include fifth pixels each having one or more further output weight values. The one or more output weight values at a pixel location can be used to blend one or more pixels of the pixel location to form a pixel of the output image (OUTPUT_IMAGE[N] 348) at the same pixel location. The one or more further output weight values may include a fourth output weight value corresponding to the retrieved reference image (e.g., REFERENCE_IMAGE[N-1] 364). The one or more further output weight values may include a fifth output weight value corresponding to input image 444. The one or more further output weight values may include a sixth output weight value corresponding to spatially filtered image 440.

The combined feedback weight map 470 may include sixth pixels each having one or more yet further feedback weight values. The one or more yet further feedback weight values at a pixel location can be used to blend one or more pixels of the pixel location to form a pixel of the reference image (REFERENCE_IMAGE[N-1] 364) at the same pixel location. The one or more yet further feedback weight values can include a seventh feedback weight value corresponding to the retrieved reference image (e.g., REFERENCE_IMAGE[N-1] 364). The one or more yet further feedback weight values can include an eighth weight value corresponding to input image 444. In some cases, the one or more yet further feedback weight values can include a ninth weight value corresponding to spatially filtered image 440.

The combined output weight map 472 may include seventh pixels each having one or more yet further output weight values. The one or more yet further output weight values at a pixel location can be used to blend one or more pixels of the pixel location to form a pixel of the output image (OUTPUT_IMAGE[N] 348) at the same pixel location. The one or more yet further output weight values can include a tenth output weight value corresponding to the retrieved reference image (e.g., REFERENCE_IMAGE[N-1] 364). The one or more yet further output weight values can include an eleventh output weight value corresponding to input image 444. In some cases, the one or more yet further output weight values can include a twelfth output weight value corresponding to spatially filtered image 440.

In some embodiments, TNR feedback and output weight maps 466 and application-specific feedback and output weight maps 468 are produced in parallel and then merged/combined by combine weight maps 408. In some embodiments, only application-specific feedback and output weight maps 468 are produced and used as combined feedback weight map 470 and combined output weight map 472 by blend using combined weight maps 408, and the TNR functionality may be turned off or switched off for a limited period of time. In some embodiments, only TNR feedback and output weight maps 466 are produced and used as combined feedback weight map 470 and combined output weight map 472 by blend using combined weight maps 408, and the CTC functionality may be turned off or switched off for a limited period of time.

In some scenarios, pixel values for the retrieved reference image, REFERENCE_IMAGE[N-1] 364 may be unavailable, such as in a beginning of the world situation (e.g., the first few frames of a new scene). Modify 484 may be included to inpaint, augment, or insert pixel values into the retrieved reference image, REFERENCE_IMAGE[N-1] 364. Modify 484 may insert one or more predetermined pixel values for one or more augmented pixels of the retrieved reference image, REFERENCE_IMAGE[N-1] 364. The retrieved reference image (REFERENCE_IMAGE[N-1] 364) may include one or more augmented pixels. An augmented pixel may have one or more default pixel values (e.g., corresponding to a predetermined or specific color). An augmented pixel may have one or more pixel values determined from a default image (e.g., a default background image, a preset background image, a generated background image, a saved background image, etc.). An augmented pixel may have one or more pixel values determined from neighboring pixels in the retrieved reference image (REFERENCE_IMAGE[N-1] 364). Modify 484 may inpaint, augment, or insert one or more pixel values into the retrieved reference image, REFERENCE_IMAGE[N-1] 364, as one or more augmented pixels, until all occluded background or reference pixels are revealed. Advantageously, modify 484 can be used to manipulate, modify, or augment the retrieved reference image. When the retrieved reference image is manipulated, modified, or augmented, the output image (OUTPUT_IMAGE[N] 348) may be generated based on the augmented retrieved reference image, and a visual effect can be created where the augmented pixels of the augmented retrieved reference image may be displayed or included as part of the output image (OUTPUT_IMAGE[N] 348).

FIG. 5A illustrates an exemplary segmentation map 502, according to some embodiments of the disclosure. Segmentation map 502 is overlaid on an image for understanding purposes. Segmentation map 502 may include pixels, where different sets of pixels may be assigned to different semantic classifications, e.g., WHITEBOARD, PERSON, CHAIR, WALL, and TABLE. Segmentation map 502 may include one or more regions, where different sets of pixels may be assigned to different semantic classifications, e.g., WHITEBOARD, PERSON, CHAIR, WALL, and TABLE. One or more regions of interest may be derived from segmentation map 502 based on an application mode. A feedback weight map and/or an output weight map may be determined, e.g., by determine application-specific weight maps 404 of FIG. 4, based on the one or more regions of interest. Weight maps may be merged or combined, e.g., by combine weight maps 406 of FIG. 4, based on the one or more regions of interest.

FIG. 5B illustrates an exemplary segmentation map 504, according to some embodiments of the disclosure. Segmentation map 504 may include pixels, where different sets of pixels may be assigned to different semantic classifications, e.g., WALL, PERSON, TV, and DOOR. Segmentation map 504 may include one or more regions, where different sets of pixels may be assigned to different semantic classifications, e.g., WALL, PERSON, TV, and DOOR. One or more regions of interest may be derived from segmentation map 502 based on an application mode. A feedback weight map and/or an output weight map may be determined, e.g., by determine application-specific weight maps 404 of FIG. 4, based on the one or more regions of interest. Weight maps may be merged or combined, e.g., by combine weight maps 406 of FIG. 4, based on the one or more regions of interest.

FIG. 6 illustrates blending using combined weight maps, according to some embodiments of the disclosure. Blend using combined weight maps 408 may include apply feedback weights 602 and apply output weights 604. Apply feedback weights 602 and apply output weights 604 may perform pixel-wise blending to produce pixels of a reference image (REFERENCE_IMAGE[N] 362) and pixels of an output image (OUTPUT_IMAGE[N] 348) respectively.

Apply feedback weights 602 may generate the reference image (REFERENCE_IMAGE[N] 362) by blending at least input image 444 and the retrieved reference image (REFERENCE_IMAGE[N-1] 364) using a feedback weight map, e.g., the first feedback weight map in application-specific feedback and output weight maps 468 of FIG. 4, the second feedback weight map in TNR feedback and output weight maps 466, and combined feedback weight map 470.

Apply output weights 604 may generate the output image (OUTPUT_IMAGE[N] 348) by blending at least input image 444 and the retrieved reference image (REFERENCE_IMAGE[N-1] 364)using an output weight map, e.g., the first output weight map in application-specific feedback and output weight maps 468 of FIG. 4, the second output weight map in TNR feedback and output weight maps 466, and combined output weight map 472.

Apply feedback weights 602 may receive input image 444 (also represented as $I_{current}$) and a retrieved reference image (REFERENCE_IMAGE[N-1] 364, also represented as $I_{ref}$). Apply feedback weights 602 may receive combined feedback weight maps 470 and apply combined feedback weight maps 470 to produce the reference image (REFERENCE_IMAGE[N] 362, also represented as $I_{fb}$). Apply feedback weights 602 may, on a pixel-by-pixel basis, apply corresponding weight values to pixel values from input image 444 and REFERENCE_IMAGE[N-1] 364 to produce a weighted sum of pixel values. The weighted sum is used as the pixel value of REFERENCE_IMAGE[N] 362. The weight values may dictate how much corresponding pixel would contribute to the pixel in REFERENCE_IMAGE[N] 362. In some embodiments, apply feedback weights 602 may perform the following weighted averaging or weighted sum operation to obtain a pixel in REFERENCE_IMAGE[N] 362, or $I_{fb}$:

$$I_{fb} = w_{ref\_fb} \cdot I_{ref} + (1 - w_{ref\_fb}) \cdot I_{current} \qquad \textbf{(eq. 1)}$$

$w_{ref\_fb}$ is the weight value corresponding to the retrieved reference image (REFERENCE_IMAGE[N-1] 364). (1 - $w_{ref\_fb}$) is the weight value corresponding to input image 444. Weight values used may sum to 1.

In some cases, apply feedback weights 602 may receive input image 444 (also represented as $I_{current}$), a retrieved reference image (REFERENCE_IMAGE[N-1] 364, also represented as $I_{ref}$), and spatially filtered image 440 (also represented as $I_{spl}$). Apply feedback weights 602 may, on a pixel-by-pixel basis, apply corresponding weight values to pixel values from input image 444, REFERENCE_IMAGE[N-1] 364, and spatially filtered image 440 to produce a weighted sum of pixel values. The weighted sum is used as the pixel value of REFERENCE_IMAGE[N] 362. The weight values may dictate how much corresponding pixel would contribute to the pixel in REFERENCE_IMAGE[N] 362. In some embodiments, apply feedback weights 602 may perform the following weighted averaging or weighted sum operation to obtain a pixel in REFERENCE_IMAGE[N] 362, or $I_{fb}$:

$$I_{fb} = w_{ref\_fb} \cdot I_{ref} + w_{spl\_fb} \cdot I_{ref} + (1 - w_{ref\_fb} - w_{spl\_fb}) \cdot I_{current} \quad \textbf{(eq. 2)}$$

$w_{ref\_fb}$ is the weight value corresponding to the retrieved reference image (REFERENCE_IMAGE[N-1] 364). $w_{spl\_fb}$ is the weight value corresponding to spatially filtered image 440. (1 - $w_{ref\_fb}$ - $w_{spl\_fb}$) is the weight value corresponding to input image 444. Weight values used may sum to 1.

Apply output weights 604 may receive input image 444 (also represented as $I_{current}$) and a retrieved reference image (REFERENCE_IMAGE[N-1] 364, also represented as $I_{ref}$). Apply output weights 604 may receive combined output weight maps 472 and apply combined output weight maps 472 to produce the output image (OUTPUT_IMAGE[N] 348, also represented as $I_{out}$). Apply output weights 604 may, on a pixel-by-pixel basis, apply corresponding weight values to pixel values from input image 444 and REFERENCE_IMAGE[N-1] 364 to produce a weighted sum of pixel values. The weighted sum is used as the pixel value of OUTPUT_IMAGE[N] 348. The weight values may dictate how much corresponding pixel would contribute to the pixel in OUTPUT_IMAGE[N] 348. In some embodiments, apply output weights 604 may perform the following weighted averaging or weighted sum operation to obtain a pixel in OUTPUT_IMAGE[N] 348, or $I_{out}$:

$$I_{out} = w_{ref\_out} \cdot I_{ref} + (1 - w_{ref\_out}) \cdot I_{current} \qquad \textbf{(eq. 3)}$$

$w_{ref\_out}$ is the weight value corresponding to the retrieved reference image (REFERENCE_IMAGE[N-1] 364). (1 - $w_{ref\_out}$) is the weight value corresponding to input image 444. Weight values used may sum to 1.

In some cases, apply output weights 604 may receive input image 444 (also represented as $I_{current}$), a retrieved reference image (REFERENCE_IMAGE[N-1] 364, also represented as $I_{ref}$), and spatially filtered image 440 (also represented as $I_{spl}$). Apply output weights 604 may, on a pixel-by-pixel basis, apply corresponding weight values to pixel values from input image 444, REFERENCE_IMAGE[N-1] 364, and spatially filtered image 440 to produce a weighted sum of pixel values. The weighted sum is used as the pixel value of OUTPUT_IMAGE[N] 348. The weight values may dictate how much corresponding pixel would contribute to the pixel in OUTPUT_IMAGE[N] 348. In some embodiments, apply output weights 604 may perform the following weighted averaging or weighted sum operation to obtain a pixel in OUTPUT_IMAGE[N] 348, or $I_{out}$:

$$I_{out} = w_{ref\_out} \cdot I_{ref} + w_{spl\_out} \cdot I_{ref} + (1 - w_{ref\_out} - w_{spl\_out}) \cdot I_{current} \qquad \textbf{(eq. 4)}$$

$w_{ref\_out}$ is the weight value corresponding to the retrieved reference image (REFERENCE_IMAGE[N-1] 364). $w_{spl\_out}$ is the weight value corresponding to spatially filtered image 440. (1 - $w_{ref\_out}$ - $w_{spl\_out}$) is the weight value corresponding to input image 444. Weight values used may sum to 1.

In some embodiments, blend using combined weight maps 408 may include subtractor 660 to subtract spatially filtered image 440 (also represented as $I_{spl}$) by input image 444 (also represented as $I_{current}$), to obtain $D_{spl} = I_{spl} - I_{current}$. Blend using combined weight maps 408 may include subtractor 662 to subtract REFERENCE_IMAGE[N-1] 364 (also represented as $I_{ref}$ by input image 444 (also represented as $I_{current}$), to obtain $D_{ref} = I_{ref} - I_{current}$.

Apply feedback weights 602 may perform an operation that is equivalent to equation 2. The operation is represented as follows:

$$I_{fb} = w_{ref\_fb} \cdot D_{ref} + w_{spl\_fb} \cdot D_{spl} + I_{current} \qquad \textbf{(eq. 5)}$$

Apply output weights 604 may perform an operation that is equivalent to equation 4. The operation is represented as follows:

$$I_{out} = w_{ref\_out} \cdot D_{ref} + w_{spl\_out} \cdot D_{spl} + I_{current} \qquad \textbf{(eq. 6)}$$

In some cases, when apply feedback weights 602 detects that the weight values used in producing a pixel in the reference image (e.g., $w_{ref\_fb}$, $w_{spl\_fb}$, (1 - $w_{ref\_fb}$ - $w_{spl\_fb}$)) causes no update to the pixel value (e.g., $w_{ref\_fb}$ = 1), apply feedback weights 602 may freeze or hold the value of a counter that counts a number of times the pixel has been recursively averaged. In some cases, when apply feedback weights 602 detects that the weight values used in producing a pixel in the reference image (e.g., $w_{ref\_fb}$, $w_{spl\_fb}$, (1 - $w_{ref\_fb}$ - $w_{spl\_fb}$)) causes no update to the pixel value (e.g., $w_{ref\_fb}$ = 1), apply feedback weights 602 may clear the value (e.g., set the value to 0) of a counter that counts a number of times the pixel has been recursively averaged. The counter may be a part of noise map 474 as illustrated in FIG. 4.

*Exemplary CTC application modes*

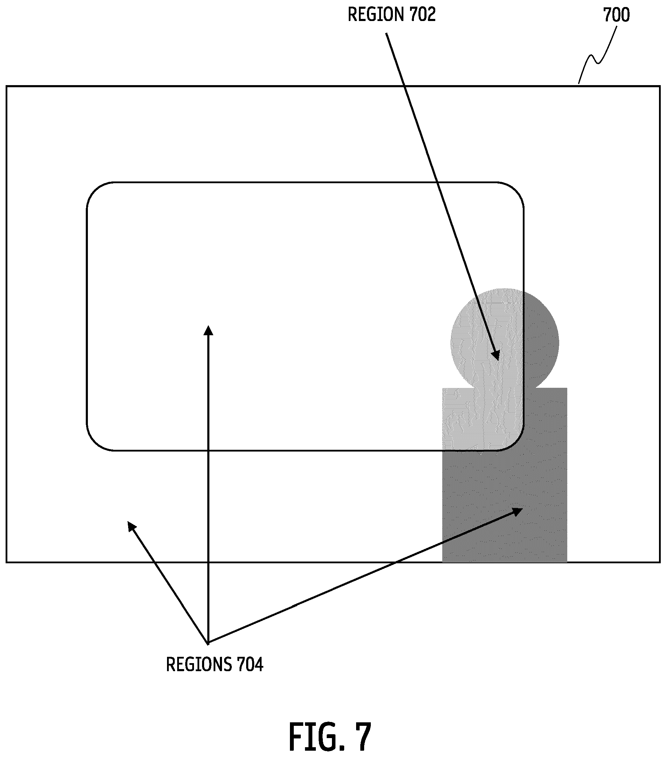

FIG. 7 illustrates a translucent person overlay application, according to some embodiments of the disclosure. Illustration 700 shows there is a person that is standing in front of a whiteboard, and region 702 may represent an overlap region of the person and the whiteboard. This may occur in lecture scenarios where instructors may often block the whiteboard, preventing students from seeing its content. The embodiments described herein can adjust the person's transparency, reveal text on the whiteboard, and enable visibility for both the instructor and the whiteboard.

Referring back to FIG. 4, segmentation map 366 may be processed based on the translucent person overlay application to identify region 702 as an overlap region (e.g., the region may have two semantic classifications). Determine application-specific weight maps 404 may determine the first feedback weight map based on whether a first pixel location in the first feedback weight map corresponds to the overlap region in the segmentation map. The feedback weights may be set to increase or max out contribution of the retrieved reference image to the reference image so that the whiteboard can be frozen or saved as the reference image. Determine application-specific weight maps 404 may determine the first output weight map based on whether the first pixel location in the first output weight map corresponds to the overlap region in the segmentation map. The output weights may be set to blend (e.g., half and half, such as a value of around 0.5) the input image with the retrieved reference image so that both the whiteboard and the person in the overlap region can be visible. The person in the overlap region may appear translucent. The output weights thus can adjust the transparency of the person in the overlap region. If the first pixel location corresponds to regions 704 outside of region 702, feedback weights and output weights may be set by determine TNR weight maps 402. Exemplary results can be seen in FIGS. 1A-1B.

FIG. 8 illustrates an erasure application, according to some embodiments of the disclosure. Illustration 800 shows there is a person that is at the lower right corner of the scene, and region 802 may represent an erasure region. This may occur in online conference meetings where an individual unintentionally walks behind the speaker or into the scene, potentially distracting other participants. The embodiments described herein can make the passerby less visible or entirely concealed to ensure a focused and uninterrupted meeting. The privacy of the passerby is also protected if the passerby is made to disappear. In a similar fashion, the embodiments described herein can be applied to a background freeze or a virtual background scenario where the foreground is shown on a virtual background. The virtual background can be a snapshot of the background of the scene, and any subjects that may enter the background can be erased.

Referring back to FIG. 4, segmentation map 366 may be processed based on the erasure application to identify region 802 as an erasure region (e.g., the region may have a classification identifying unwanted content or nuisance content). Determine application-specific weight maps 404 may determine the first feedback weight map based on whether a second pixel location in the first feedback weight map corresponds to the erasure region in the segmentation map. The feedback weights may be set to increase or max out contribution of the retrieved reference image to the reference image so that the background can be frozen or saved as the reference image. Over time, the reference image would no longer be updated, e.g., after all the occluded background is revealed. In some cases, occluded background is inpainted into the reference image, and thus the retrieved reference image. Determine application-specific weight maps 404 may determine the first output weight map based on whether the first pixel location in the first output weight map corresponds to the erasure region in the segmentation map. The output weights may be set to zero out the input image and increase or max out contribution of the retrieved reference image so that only the background is visible. The person in the erasure region may disappear from the scene seamlessly. If the first pixel location corresponds to regions 804 outside of region 802, feedback weights and output weights may be set by determine TNR weight maps 402. Exemplary results can be seen in FIG. 2B.

FIG. 9 illustrates a post-occlusion filter application, according to some embodiments of the disclosure. Post-occlusion filter application improves upon TNR methods and can reduce artifacts that may otherwise be introduced by TNR. In TNR, when a subject moves and temporally occludes the static background, the background, when revealed again, initially presents poor details or noise. This artifact is due to the absence of a temporally denoised reference and can result in a trail of lower quality pixels behind the moving subject until the revealed areas reach steady state again. Illustration 900 shows moving subject 902, and region 904 that is previously occluded by moving subject 902. Region 904, when revealed, may have such lower quality pixels if not addressed. The embodiments described herein can preserve pixels of the static background in the reference image and prevent moving subject 902 from entering the reference image. Doing so would eliminate the need to wait for a steady state to achieve good temporal denoising in the revealed area (e.g., region 904), because the pixels are maintained in the reference image when the revealed area was previously occluded by the moving subject 902. The pixels maintained in the reference image can be used post-occlusion.

Referring back to FIG. 4, segmentation map 366 may be processed based on the post-occlusion filter application to identify a region where the moving object may be occluding the static background. In some cases, a static background may be referred to as a non-changing background, a non-moving background, or a fixed background. Determine application-specific weight maps 404 may determine the first feedback weight map based on whether a third pixel location in the first feedback weight map corresponds to the region where the moving object may be occluding the static background (or move into the static background). The feedback weights may be set to increase or max out contribution of the retrieved reference image to the reference image so that the static background can be frozen or saved as the reference image, and the moving subject is not averaged to produce the reference image. Determine application-specific weight maps 404 may determine from noise map 474 of FIG. 4 whether the reference image had been frozen. Determine application-specific weight maps 404 may determine from noise map 474 whether a counter in noise map 474 indicates that the reference image had been frozen or that the reference image had not been updated. Determine application-specific weight maps 404 may continue to determine feedback weights to freeze the reference image even when the moving object continues to occlude the static background. Segmentation map 366 may be processed based on the post-occlusion filter application to identify a region where the moving object may now reveal the static background. Feedback weights may be set by weight maps determined for TNR and allow TNR to resume updating the reference image to perform TNR.

*An exemplary method for content transparency control*

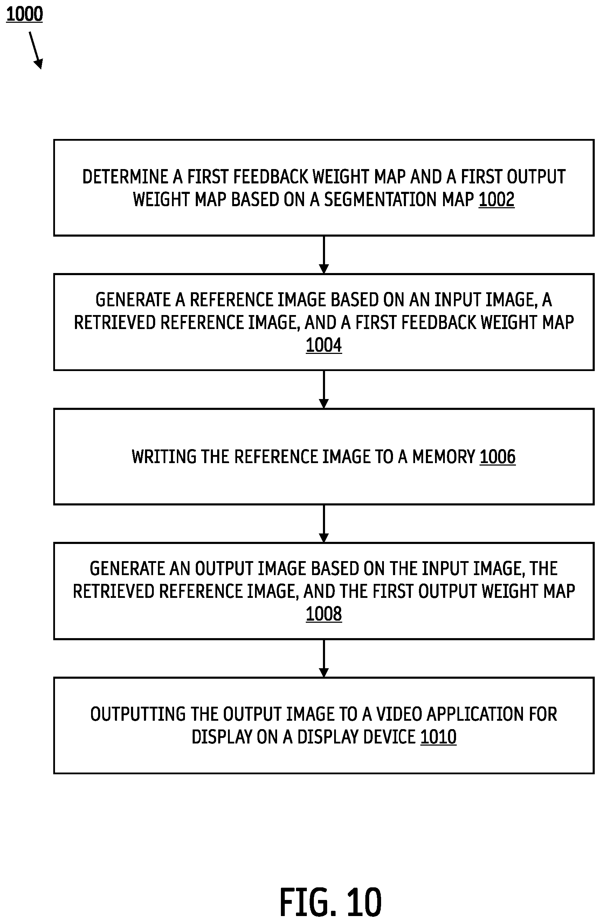

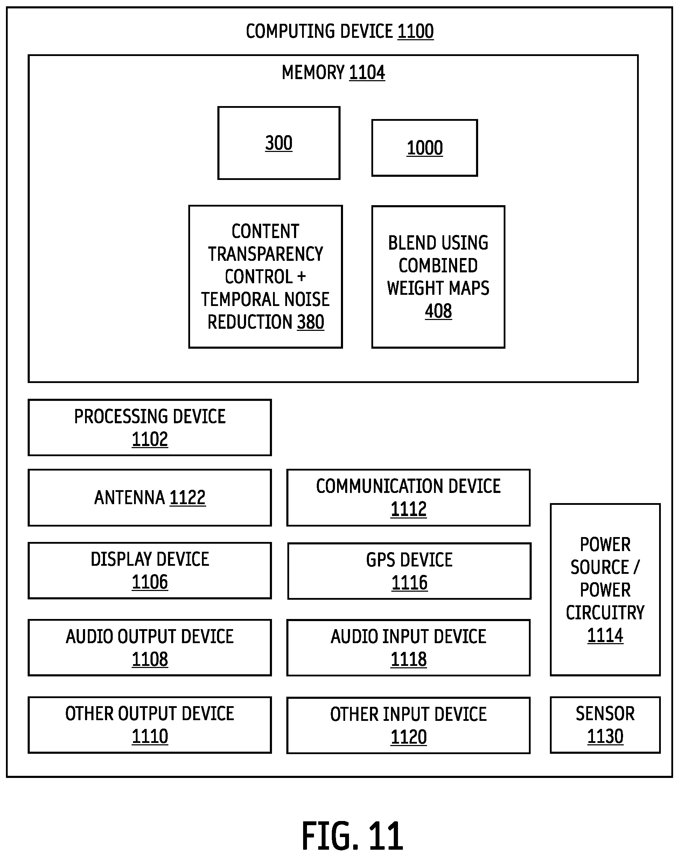

FIG. 10 is a flowchart showing a method for content transparency control, according to some embodiments of the disclosure. Method 1000 may be performed by ISP 306 of FIG. 3. Method 1000 may be performed by processing device 1102 of FIG. 11. Method 1000 can be performed using a computing device, such as computing device 1100 in FIG. 11. Method 1000 may be performed using one or more parts illustrated in FIGS. 3-4 and 6.

In 1002, a first feedback weight map and a first output weight map based on a segmentation map may be determined.

In 1004, a reference image may be generated based on an input image, a retrieved reference image, and the first feedback weight map.

In 1006, the reference image may be written to a memory.

In 1008, an output image may be generated based on the input image, the retrieved reference image, and the first output weight map.

In 1010, the output image can be output to a video application for display on a display device.

*Exemplary computing device*

FIG. 11 is a block diagram of an apparatus or a system, e.g., an exemplary computing device 1100, according to some embodiments of the disclosure. One or more computing devices 1100 may be used to implement the functionalities described with the FIGS. and herein. A number of components are illustrated in FIG. 11. can be included in the computing device 1100, but any one or more of these components may be omitted or duplicated, as suitable for the application. In some embodiments, some or all of the components included in the computing device 1100 may be attached to one or more motherboards. In some embodiments, some or all of these components are fabricated onto a single system on a chip (SoC) die. Additionally, in various embodiments, the computing device 1100 may not include one or more of the components illustrated in FIG. 11, and the computing device 1100 may include interface circuitry for coupling to the one or more components. For example, the computing device 1100 may not include a display device 1106, and may include display device interface circuitry (e.g., a connector and driver circuitry) to which a display device 1106 may be coupled. In another set of examples, the computing device 1100 may not include an audio input device 1118 or an audio output device 1108 and may include audio input or output device interface circuitry (e.g., connectors and supporting circuitry) to which an audio input device 1118 or audio output device 1108 may be coupled.

The computing device 1100 may include a processing device 1102 (e.g., one or more processing devices, one or more of the same types of processing device, one or more of different types of processing device). The processing device 1102 may include electronic circuitry that process electronic data from data storage elements (e.g., registers, memory, resistors, capacitors, quantum bit cells) to transform that electronic data into other electronic data that may be stored in registers and/or memory. Examples of processing device 1102 may include a CPU, a GPU, a quantum processor, a machine learning processor, an artificial intelligence processor, a neural network processor, an artificial intelligence accelerator, an application-specific integrated circuit (ASIC), an analog signal processor, an analog computer, a microprocessor, a digital signal processor, a field programmable gate array (FPGA), a tensor processing unit (TPU), a data processing unit (DPU), etc.

The computing device 1100 may include a memory 1104, which may itself include one or more memory devices such as volatile memory (e.g., DRAM), nonvolatile memory (e.g., read-only memory (ROM)), high bandwidth memory (HBM), flash memory, solid state memory, and/or a hard drive. Memory 1104 includes one or more non-transitory computer-readable storage media. In some embodiments, memory 1104 may include memory that shares a die with the processing device 1102.

In some embodiments, memory 1104 includes one or more non-transitory computer-readable media storing instructions executable to perform operations described with FIGS. 3-4, and 6-9 and herein, such as the method 1000 illustrated in FIG. 10.

Memory 1104 may store instructions that encode one or more exemplary parts. Exemplary parts, such as one or more parts of system 300 of FIG. 3, content transparency control + temporal noise reduction 380 of FIGS. 3-4, and blend using combined weight maps 408, may be encoded as instructions and stored in memory 1104 are depicted. The instructions stored in the one or more non-transitory computer-readable media may be executed by processing device 1102.

In some embodiments, memory 1104 may store data, e.g., data structures, binary data, bits, metadata, files, blobs, etc., as described with the FIGS. and herein. Exemplary data, such as images, weight maps, motion map, segmentation map, noise map, etc., described herein, may be stored in memory 1104.

In some embodiments, memory 1104 may store one or more machine learning models (and or parts thereof) that are used in segmentation 384. Memory 1104 may store training data for training the one or more machine learning models. Memory 1104 may store input data, output data, intermediate outputs, intermediate inputs of one or more machine learning models. Memory 1104 may store instructions to perform one or more operations of the machine learning model. Memory 1104 may store one or more parameters used by the machine learning model. Memory 1104 may store information that encodes how processing units of the machine learning model are connected with each other.

In some embodiments, the computing device 1100 may include a communication device 1112 (e.g., one or more communication devices). For example, the communication device 1112 may be configured for managing wired and/or wireless communications for the transfer of data to and from the computing device 1100. The term "wireless" and its derivatives may be used to describe circuits, devices, systems, methods, techniques, communications channels, etc., that may communicate data through the use of modulated electromagnetic radiation through a nonsolid medium. The term does not imply that the associated devices do not contain any wires, although in some embodiments they might not. The communication device 1112 may implement any of a number of wireless standards or protocols, including but not limited to Institute for Electrical and Electronic Engineers (IEEE) standards including Wi-Fi (IEEE 802.10 family), IEEE 802.16 standards (e.g., IEEE 802.16-2005 Amendment), Long-Term Evolution (LTE) project along with any amendments, updates, and/or revisions (e.g., advanced LTE project, ultramobile broadband (UMB) project (also referred to as "3GPP2"), etc.). IEEE 802.16 compatible Broadband Wireless Access (BWA) networks are generally referred to as WiMAX networks, an acronym that stands for worldwide interoperability for microwave access, which is a certification mark for products that pass conformity and interoperability tests for the IEEE 802.16 standards. The communication device 1112 may operate in accordance with a Global System for Mobile Communication (GSM), General Packet Radio Service (GPRS), Universal Mobile Telecommunications System (UMTS), High Speed Packet Access (HSPA), Evolved HSPA (E-HSPA), or LTE network. The communication device 1112 may operate in accordance with Enhanced Data for GSM Evolution (EDGE), GSM EDGE Radio Access Network (GERAN), Universal Terrestrial Radio Access Network (UTRAN), or Evolved UTRAN (E-UTRAN). The communication device 1112 may operate in accordance with Code-division Multiple Access (CDMA), Time Division Multiple Access (TDMA), Digital Enhanced Cordless Telecommunications (DECT), Evolution-Data Optimized (EV-DO), and derivatives thereof, as well as any other wireless protocols that are designated as 3G, 4G, 5G, and beyond. The communication device 1112 may operate in accordance with other wireless protocols in other embodiments. The computing device 1100 may include an antenna 1122 to facilitate wireless communications and/or to receive other wireless communications (such as radio frequency transmissions). The computing device 1100 may include receiver circuits and/or transmitter circuits. In some embodiments, the communication device 1112 may manage wired communications, such as electrical, optical, or any other suitable communication protocols (e.g., the Ethernet). As noted above, communication device 1112 may include multiple communication chips. For instance, a first communication device 1112 may be dedicated to shorter-range wireless communications such as Wi-Fi or Bluetooth, and a second communication device 1112 may be dedicated to longer-range wireless communications such as global positioning system (GPS), EDGE, GPRS, CDMA, WiMAX, LTE, EV-DO, or others. In some embodiments, a first communication device 1112 may be dedicated to wireless communications, and a second communication device 1112 may be dedicated to wired communications.

The computing device 1100 may include power source / power circuitry 1114. The power source / power circuitry 1114 may include one or more energy storage devices (e.g., batteries or capacitors) and/or circuitry for coupling components of the computing device 1100 to an energy source separate from the computing device 1100 (e.g., DC power, AC power, etc.).

The computing device 1100 may include a display device 1106 (or corresponding interface circuitry, as discussed above). Display device 1106 may include any visual indicators, such as a heads-up display, a computer monitor, a projector, a touchscreen display, a liquid crystal display (LCD), a light-emitting diode display, or a flat panel display, for example.

The computing device 1100 may include an audio output device 1108 (or corresponding interface circuitry, as discussed above). The audio output device 1108 may include any device that generates an audible indicator, such as speakers, headsets, or earbuds, for example.

The computing device 1100 may include an audio input device 1118 (or corresponding interface circuitry, as discussed above). The audio input device 1118 may include any device that generates a signal representative of a sound, such as microphones, microphone arrays, or digital instruments (e.g., instruments having a musical instrument digital interface (MIDI) output).

The computing device 1100 may include a GPS device 1116 (or corresponding interface circuitry, as discussed above). The GPS device 1116 may be in communication with a satellite-based system and may receive a location of the computing device 1100, as known in the art.

The computing device 1100 may include a sensor 1130 (or one or more sensors). The computing device 1100 may include corresponding interface circuitry, as discussed above). Sensor 1130 may sense physical phenomenon and translate the physical phenomenon into electrical signals that can be processed by, e.g., processing device 1102. Examples of sensor 1130 may include: capacitive sensor, inductive sensor, resistive sensor, electromagnetic field sensor, light sensor, camera, imager, microphone, pressure sensor, temperature sensor, vibrational sensor, accelerometer, gyroscope, strain sensor, moisture sensor, humidity sensor, distance sensor, range sensor, time-of-flight sensor, pH sensor, particle sensor, air quality sensor, chemical sensor, gas sensor, biosensor, ultrasound sensor, a scanner, etc.

The computing device 1100 may include another output device 1110 (or corresponding interface circuitry, as discussed above). Examples of the other output device 1110 may include an audio codec, a video codec, a printer, a wired or wireless transmitter for providing information to other devices, haptic output device, gas output device, vibrational output device, lighting output device, home automation controller, or an additional storage device.

The computing device 1100 may include another input device 1120 (or corresponding interface circuitry, as discussed above). Examples of the other input device 1120 may include an accelerometer, a gyroscope, a compass, an image capture device, a keyboard, a cursor control device such as a mouse, a stylus, a touchpad, a bar code reader, a Quick Response (QR) code reader, any sensor, or a radio frequency identification (RFID) reader.

The computing device 1100 may have any desired form factor, such as a handheld or mobile computer system (e.g., a cell phone, a smart phone, a mobile Internet device, a music player, a tablet computer, a laptop computer, a netbook computer, a personal digital assistant (PDA), a personal computer, a remote control, wearable device, headgear, eyewear, footwear, electronic clothing, etc.), a desktop computer system, a server or other networked computing component, a printer, a scanner, a monitor, a set-top box, an entertainment control unit, a vehicle control unit, a digital camera, a digital video recorder, an Internet-of-Things device, or a wearable computer system. In some embodiments, the computing device 1100 may be any other electronic device that processes data.

*Select examples*

Example 1 provides a method, including determining a first feedback weight map and a first output weight map based on a segmentation map; generating a reference image based on an input image, a retrieved reference image, and the first feedback weight map; writing the reference image to a memory; generating an output image based on the input image, the retrieved reference image, and the first output weight map; and outputting the output image to a video application for display on a display device.

Example 2 provides the method of example 1, where the segmentation map includes first pixels each assigned to one or more semantic classifications.

Example 3 provides the method of example 1 or 2, where the first feedback weight map includes second pixels each having one or more feedback weight values.

Example 4 provides the method of example 3, where the one or more feedback weight values include a first feedback weight value corresponding to the retrieved reference image; and a second weight value corresponding to the input image.

Example 5 provides the method of example 3 or 4, where the one or more feedback weight values include a third weight value corresponding to a spatially filtered input image.

Example 6 provides the method of any one of examples 1-5, where the first output weight map includes third pixels each having one or more output weight values.

Example 7 provides the method of example 6, where the one or more output weight values include a first output weight value corresponding to the retrieved reference image; and a second output weight value corresponding to the input image.

Example 8 provides the method of example 6 or 7, where the one or more output weight values include a third output weight value corresponding to a spatially filtered input image.

Example 9 provides the method of any one of examples 1-8, where determining the first feedback weight map and the first output weight map includes determining the first feedback weight map and the first output weight map further based on an application mode indicated by the video application.

Example 10 provides the method of any one of examples 1-9, where determining the first feedback weight map and the first output weight map includes determining the first feedback weight map based on whether a first pixel location in the first feedback weight map corresponds to an overlap region in the segmentation map; and determining the first output weight map based on whether the first pixel location in the first output weight map corresponds to the overlap region in the segmentation map.

Example 11 provides the method of any one of examples 1-10, where determining the first feedback weight map and the first output weight map includes determining the first feedback weight map based on whether a second pixel location in the first feedback weight map corresponds to an erasure region in the segmentation map; and determining the first output weight map based on whether the second pixel location in the first output weight map corresponds to the erasure region in the segmentation map.

Example 12 provides the method of any one of examples 1-11, where determining the first feedback weight map and the first output weight map includes determining the first feedback weight map based on whether a third pixel location corresponds to a moving object occluding a static background.

Example 13 provides the method of any one of examples 1-12, further including determining a second feedback weight map and a second output weight map based on one or more of: a motion map, and a user preference; where:

generating the reference image includes generating the reference image further based on the second feedback weight map; and generating the output image includes generating the output image further based on the second output weight map.

Example 14 provides the method of example 13, where the second feedback weight map includes fourth pixels each having one or more further feedback weight values.

Example 15 provides the method of example 14, where the one or more further feedback weight values include a fourth feedback weight value corresponding to the retrieved reference image; and a fifth feedback weight value corresponding to the input image.

Example 16 provides the method of example 14 or 15, where the one or more further feedback weight values include a sixth feedback weight value corresponding to a spatially filtered input image.

Example 17 provides the method of any one of examples 13-16, where the second output weight map includes fifth pixels each having one or more further output weight values.

Example 18 provides the method of example 17, where the one or more further output weight values include a fourth output weight value corresponding to the retrieved reference image; and a fifth output weight value corresponding to the input image.

Example 19 provides the method of example 17 or 18, where the one or more further output weight values include a sixth output weight value corresponding to a spatially filtered input image.

Example 20 provides the method of any one of examples 1-19, further including retrieving the retrieved reference image from the memory.

Example 21 provides the method of any one of examples 1-20, further including inserting one or more predetermined pixel values into the retrieved reference image.

Example 22 provides the method of any one of examples 1-21, where generating the reference image includes blending at least the input image and the retrieved reference image using the first feedback weight map.

Example 23 provides the method of any one of examples 1-22, where generating the output image includes blending at least the input image and the retrieved reference image using the first output weight map.

Example 24 provides one or more non-transitory computer-readable media storing instructions that, when executed by one or more processors, cause the one or more processors to: determine a first feedback weight map and a first output weight map based on a segmentation map; generate a reference image based on an input image, a retrieved reference image, and the first feedback weight map; write the reference image to a memory; generate an output image based on the input image, the retrieved reference image, and the first output weight map; and output the output image to a video application for display on a display device.

Example 25 provides the one or more non-transitory computer-readable media of example 24, where the segmentation map includes first pixels each assigned to one or more semantic classifications.

Example 26 provides the one or more non-transitory computer-readable media of example 24 or 25, where the first feedback weight map includes second pixels each having one or more feedback weight values.

Example 27 provides the one or more non-transitory computer-readable media of example 26, where the one or more feedback weight values include a first feedback weight value corresponding to the retrieved reference image; and a second weight value corresponding to the input image.

Example 28 provides the one or more non-transitory computer-readable media of example 26 or 27, where the one or more feedback weight values include a third weight value corresponding to a spatially filtered input image.

Example 29 provides the one or more non-transitory computer-readable media of any one of examples 24-28, where the first output weight map includes third pixels each having one or more output weight values.

Example 30 provides the one or more non-transitory computer-readable media of example 29, where the one or more output weight values include a first output weight value corresponding to the retrieved reference image; and a second output weight value corresponding to the input image.

Example 31 provides the one or more non-transitory computer-readable media of example 29 or 30, where the one or more output weight values include a third output weight value corresponding to a spatially filtered input image.

Example 32 provides the one or more non-transitory computer-readable media of any one of examples 24-31, where determining the first feedback weight map and the first output weight map includes determining the first feedback weight map and the first output weight map further based on an application mode indicated by the video application.

Example 33 provides the one or more non-transitory computer-readable media of any one of examples 24-32, where determining the first feedback weight map and the first output weight map includes determining the first feedback weight map based on whether a first pixel location in the first feedback weight map corresponds to an overlap region in the segmentation map; and determining the first output weight map based on whether the first pixel location in the first output weight map corresponds to the overlap region in the segmentation map.

Example 34 provides the one or more non-transitory computer-readable media of any one of examples 24-33, where determining the first feedback weight map and the first output weight map includes determining the first feedback weight map based on whether a second pixel location in the first feedback weight map corresponds to an erasure region in the segmentation map; and determining the first output weight map based on whether the second pixel location in the first output weight map corresponds to the erasure region in the segmentation map.

Example 35 provides the one or more non-transitory computer-readable media of any one of examples 24-34, where determining the first feedback weight map and the first output weight map includes determining the first feedback weight map based on whether a third pixel location corresponds to a moving object occluding a static background.

Example 36 provides the one or more non-transitory computer-readable media of any one of examples 24-35, where the instructions further cause the one or more processors to: determine a second feedback weight map and a second output weight map based on one or more of: a motion map, and a user preference; where: generating the reference image includes generating the reference image further based on the second feedback weight map; and generating the output image includes generating the output image further based on the second output weight map.

Example 37 provides the one or more non-transitory computer-readable media of example 36, where the second feedback weight map includes fourth pixels each having one or more further feedback weight values.

Example 38 provides the one or more non-transitory computer-readable media of example 37, where the one or more further feedback weight values include a fourth feedback weight value corresponding to the retrieved reference image; and a fifth feedback weight value corresponding to the input image.

Example 39 provides the one or more non-transitory computer-readable media of example 37 or 38, where the one or more further feedback weight values include a sixth feedback weight value corresponding to a spatially filtered input image.

Example 40 provides the one or more non-transitory computer-readable media of any one of examples 36-39, where the second output weight map includes fifth pixels each having one or more further output weight values.

Example 41 provides the one or more non-transitory computer-readable media of example 40, where the one or more further output weight values include a fourth output weight value corresponding to the retrieved reference image; and a fifth output weight value corresponding to the input image.

Example 42 provides the one or more non-transitory computer-readable media of example 40 or 41, where the one or more further output weight values include a sixth output weight value corresponding to a spatially filtered input image.

Example 43 provides the one or more non-transitory computer-readable media of any one of examples 24-42, where the instructions further cause the one or more processors to: retrieve the retrieved reference image from the memory.

Example 44 provides the one or more non-transitory computer-readable media of any one of examples 24-43, where the instructions further cause the one or more processors to: insert one or more predetermined pixel values into the retrieved reference image.

Example 45 provides the one or more non-transitory computer-readable media of any one of examples 24-44, where generating the reference image includes blending at least the input image and the retrieved reference image using the first feedback weight map.

Example 46 provides the one or more non-transitory computer-readable media of any one of examples 24-45, where generating the output image includes blending at least the input image and the retrieved reference image using the first output weight map.

Example 47 provides a system, including one or more processors; and one or more non-transitory computer-readable media storing instructions that, when executed by the one or more processors, cause the one or more processors to: determine a first feedback weight map and a first output weight map based on a segmentation map; generate a reference image based on an input image, a retrieved reference image, and the first feedback weight map; write the reference image to a memory; generate an output image based on the input image, the retrieved reference image, and the first output weight map; and output the output image to a video application for display on a display device.

Example 48 provides the system of example 47, where the segmentation map includes first pixels each assigned to one or more semantic classifications.

Example 49 provides the system of example 47 or 48, where the first feedback weight map includes second pixels each having one or more feedback weight values.

Example 50 provides the system of example 49, where the one or more feedback weight values include a first feedback weight value corresponding to the retrieved reference image; and a second weight value corresponding to the input image.

Example 51 provides the system of example 49 or 50, where the one or more feedback weight values include a third weight value corresponding to a spatially filtered input image.

Example 52 provides the system of any one of examples 49-51, where the first output weight map includes third pixels each having one or more output weight values.

Example 53 provides the system of example 52, where the one or more output weight values include a first output weight value corresponding to the retrieved reference image; and a second output weight value corresponding to the input image.

Example 54 provides the system of example 52 or 53, where the one or more output weight values include a third output weight value corresponding to a spatially filtered input image.

Example 55 provides the system of any one of examples 49-54, where determining the first feedback weight map and the first output weight map includes determining the first feedback weight map and the first output weight map further based on an application mode indicated by the video application.

Example 56 provides the system of any one of examples 49-55, where determining the first feedback weight map and the first output weight map includes determining the first feedback weight map based on whether a first pixel location in the first feedback weight map corresponds to an overlap region in the segmentation map; and determining the first output weight map based on whether the first pixel location in the first output weight map corresponds to the overlap region in the segmentation map.

Example 57 provides the system of any one of examples 49-56, where determining the first feedback weight map and the first output weight map includes determining the first feedback weight map based on whether a second pixel location in the first feedback weight map corresponds to an erasure region in the segmentation map; and determining the first output weight map based on whether the second pixel location in the first output weight map corresponds to the erasure region in the segmentation map.

Example 58 provides the system of any one of examples 49-57, where determining the first feedback weight map and the first output weight map includes determining the first feedback weight map based on whether a third pixel location corresponds to a moving object occluding a static background.

Example 59 provides the system of any one of examples 49-58, where the instructions further cause the one or more processors to: determine a second feedback weight map and a second output weight map based on one or more of: a motion map, and a user preference; where: generating the reference image includes generating the reference image further based on the second feedback weight map; and generating the output image includes generating the output image further based on the second output weight map.

Example 60 provides the system of example 59, where the second feedback weight map includes fourth pixels each having one or more further feedback weight values.

Example 61 provides the system of example 60, where the one or more further feedback weight values include a fourth feedback weight value corresponding to the retrieved reference image; and a fifth feedback weight value corresponding to the input image.

Example 62 provides the system of example 60 or 61, where the one or more further feedback weight values include a sixth feedback weight value corresponding to a spatially filtered input image.

Example 63 provides the system of any one of examples 59-62, where the second output weight map includes fifth pixels each having one or more further output weight values.

Example 64 provides the system of example 63, where the one or more further output weight values include a fourth output weight value corresponding to the retrieved reference image; and a fifth output weight value corresponding to the input image.

Example 65 provides the system of example 63 or 64, where the one or more further output weight values include a sixth output weight value corresponding to a spatially filtered input image.

Example 66 provides the system of any one of examples 47-65, where the instructions further cause the one or more processors to: retrieve the retrieved reference image from the memory.

Example 67 provides the system of any one of examples 47-66, where the instructions further cause the one or more processors to: insert one or more predetermined pixel values into the retrieved reference image.

Example 68 provides the system of any one of examples 47-67, where generating the reference image includes blending at least the input image and the retrieved reference image using the first feedback weight map.

Example 69 provides the system of any one of examples 47-68, where generating the output image includes blending at least the input image and the retrieved reference image using the first output weight map.

Example A provides an apparatus comprising means to carry out or means for carrying out any one of the methods provided in examples 1-23 and methods/processes described herein.

Example B provides an image signal processor to perform any one of the methods provided in examples 1-23 and methods/processes described herein.

Example C provides content transparency control and temporal noise reduction 380 as described herein.

Example D provides blend using combined weight maps 408 as described herein.

Example E provides a computer-implemented system comprising ISP 306, DDR memory 382 as described herein.

Example F provides a computer-implemented system comprising ISP 306, DDR memory 382, and processor 308 as described herein.

*Variations and other notes*

Although the operations of the example method shown in and described with reference to FIGS. 3-4, 6, and 10 are illustrated as occurring once each and in a particular order, it will be recognized that the operations may be performed in any suitable order and repeated as desired. Additionally, one or more operations may be performed in parallel. Furthermore, the operations illustrated in FIGS. 3-4, 6, and 10 may be combined or may include more or fewer details than described.

The above description of illustrated implementations of the disclosure, including what is described in the Abstract, is not intended to be exhaustive or to limit the disclosure to the precise forms disclosed. While specific implementations of, and examples for, the disclosure are described herein for illustrative purposes, various equivalent modifications are possible within the scope of the disclosure, as those skilled in the relevant art will recognize. These modifications may be made to the disclosure in light of the above detailed description.

For purposes of explanation, specific numbers, materials and configurations are set forth in order to provide a thorough understanding of the illustrative implementations. However, it will be apparent to one skilled in the art that the present disclosure may be practiced without the specific details and/or that the present disclosure may be practiced with only some of the described aspects. In other instances, well known features are omitted or simplified in order not to obscure the illustrative implementations.

Further, references are made to the accompanying drawings that form a part hereof, and in which are shown, by way of illustration, embodiments that may be practiced. It is to be understood that other embodiments may be utilized, and structural or logical changes may be made without departing from the scope of the present disclosure. Therefore, the following detailed description is not to be taken in a limiting sense.

Various operations may be described as multiple discrete actions or operations in turn, in a manner that is most helpful in understanding the disclosed subject matter. However, the order of description should not be construed as to imply that these operations are necessarily order dependent. In particular, these operations may not be performed in the order of presentation. Operations described may be performed in a different order from the described embodiment. Various additional operations may be performed or described operations may be omitted in additional embodiments.

For the purposes of the present disclosure, the phrase "A or B" or the phrase "A and/or B" means (A), (B), or (A and B). For the purposes of the present disclosure, the phrase "A, B, or C" or the phrase "A, B, and/or C" means (A), (B), (C), (A and B), (A and C), (B and C), or (A, B, and C). The term "between," when used with reference to measurement ranges, is inclusive of the ends of the measurement ranges.

The description uses the phrases "in an embodiment" or "in embodiments," which may each refer to one or more of the same or different embodiments. The terms "comprising," "including," "having," and the like, as used with respect to embodiments of the present disclosure, are synonymous. The disclosure may use perspective-based descriptions such as "above," "below," "top," "bottom," and "side" to explain various features of the drawings, but these terms are simply for ease of discussion, and do not imply a desired or required orientation. The accompanying drawings are not necessarily drawn to scale. Unless otherwise specified, the use of the ordinal adjectives "first," "second," and "third," etc., to describe a common object, merely indicates that different instances of like objects are being referred to and are not intended to imply that the objects so described must be in a given sequence, either temporally, spatially, in ranking or in any other manner.

In the following detailed description, various aspects of the illustrative implementations will be described using terms commonly employed by those skilled in the art to convey the substance of their work to others skilled in the art.

The terms "substantially," "close," "approximately," "near," and "about," generally refer to being within +/- 20% of a target value as described herein or as known in the art. Similarly, terms indicating orientation of various elements, e.g., "coplanar," "perpendicular," "orthogonal," "parallel," or any other angle between the elements, generally refer to being within +/- 5-20% of a target value as described herein or as known in the art.

In addition, the terms "comprise," "comprising," "include," "including," "have," "having" or any other variation thereof, are intended to cover a non-exclusive inclusion. For example, a method, process, or device, that comprises a list of elements is not necessarily limited to only those elements but may include other elements not expressly listed or inherent to such method, process, or device. Also, the term "or" refers to an inclusive "or" and not to an exclusive "or."

The systems, methods and devices of this disclosure each have several innovative aspects, no single one of which is solely responsible for all desirable attributes disclosed herein. Details of one or more implementations of the subject matter described in this specification are set forth in the description and the accompanying drawings.

**Claims**

1. A method, comprising:

    determining a first feedback weight map and a first output weight map based on a segmentation map;

generating a reference image based on an input image, a retrieved reference image, and the first feedback weight map;

writing the reference image to a memory;

generating an output image based on the input image, the retrieved reference image, and the first output weight map; and

outputting the output image to a video application for display on a display device.

2. The method of claim 1, wherein the segmentation map comprises first pixels each assigned to one or more semantic classifications.

3. The method of claim 1 or 2, wherein determining the first feedback weight map and the first output weight map comprises:

determining the first feedback weight map and the first output weight map further based on an application mode indicated by the video application.

4. The method of any one of claims 1-3, wherein determining the first feedback weight map and the first output weight map comprises:

determining the first feedback weight map based on whether a first pixel location in the first feedback weight map corresponds to an overlap region in the segmentation map; and

determining the first output weight map based on whether the first pixel location in the first output weight map corresponds to the overlap region in the segmentation map.

5. The method of any one of claims 1-4, wherein determining the first feedback weight map and the first output weight map comprises:

determining the first feedback weight map based on whether a second pixel location in the first feedback weight map corresponds to an erasure region in the segmentation map; and

determining the first output weight map based on whether the second pixel location in the first output weight map corresponds to the erasure region in the segmentation map.

6. The method of any one of claims 1-5, wherein determining the first feedback weight map and the first output weight map comprises:

determining the first feedback weight map based on whether a third pixel location corresponds to a moving object occluding a static background.

7. The method of any one of claims 1-6, further comprising:

determining a second feedback weight map and a second output weight map based on one or more of: a motion map, and a user preference.

8. The method of claim 7, wherein:

generating the reference image comprises generating the reference image further based on the second feedback weight map; and

generating the output image comprises generating the output image further based on the second output weight map.

9. The method of any one of claims 1-8, further comprising:

inserting one or more predetermined pixel values into the retrieved reference image.

10. The method of any one of claims 1-9, wherein generating the reference image comprises:

blending at least the input image and the retrieved reference image using the first feedback weight map.

11. The method of any one of claims 1-10, wherein generating the output image comprises:

blending at least the input image and the retrieved reference image using the first output weight map.

12. One or more non-transitory computer-readable media storing instructions that, when executed by one or more processors, cause the one or more processors to perform a method according to any one of claims 1-11.

**13.** A system, comprising:

one or more processors; and
one or more non-transitory computer-readable media storing instructions that, when executed by the one or more processors, cause the one or more processors to perform a method according to any one of claims 1-11.

**14.** An apparatus comprising means for performing a method according to any one of claims 1-11.

FIG. 1A

FIG. 1B

202

FIG. 2A

204

FIG. 2B

300

302

RAW IMAGE 346

ISP 306

IMAGE PROCESSING PIPELINE
304

MODE 368

CONTENT
TRANSPARENCY
CONTROL +
TEMPORAL NOISE
REDUCTION 380

REFERENCE_IMAGE[N] 362

DDR MEMORY 382

REFERENCE_IMAGE[N-1] 364

SEGMENTATION MAP 366

PROCESSED IMAGE 316

PROCESSOR 308

OUTPUT_IMAGE[N] 348

POST-PROCESSING 330

PROCESSED IMAGE 316

SEGMENTATION 384

OUTPUT_IMAGE[N] 348

VIDEO APPLICATION 390

332

386

FIG. 3

MOTION
MAP 460

USER
PREFERENCE(S)
462

MODE 368

SEGMENTATION
MAP 366

NOISE MAP
474

DETERMINE TNR WEIGHT MAPS
402

DETERMINE APPLICATION-
SPECIFIC WEIGHT MAPS 404

TNR FB AND
OUTPUT
WEIGHT MAPS
466

APPLICATION-
SPECIFIC FB
AND OUTPUT
WEIGHT MAPS
468

COMBINE WEIGHT MAPS 406

SEGMENTATION
MAP 366

COMBINED FB
WEIGHT MAP 470

COMBINED OUTPUT
WEIGHT MAP 472

REFERENCE_IMAGE[N] 362

INPUT IMAGE 444

BLEND USING COMBINED
WEIGHT MAPS 408

MODIFY
484

DDR
MEMORY 382

SPATIALLY FILTERED IMAGE 440

REFERENCE_IMAGE[N-1] 364

OUTPUT_IMAGE[N] 348

CONTENT TRANSPARENCY CONTROL +
TEMPORAL NOISE REDUCTION 380

FIG. 4

FIG. 5A

FIG. 5B

BLEND USING COMBINED WEIGHT MAPS **408**

INPUT IMAGE 444

$I_{current}$

$I_{spl}$     **−**

SPATIALLY FILTERED IMAGE 440

660

$D_{spl}$

INPUT IMAGE 444

$I_{current}$

$D_{ref}$    **−**    $I_{ref}$

662    REFERENCE_IMAGE[N-1] 364

$I_{current}$

$D_{spl}$

$D_{ref}$

COMBINED FB WEIGHT MAPS 470

APPLY FB WEIGHTS **602**

$$I_{fb} = w_{ref\_fb} \cdot D_{ref} + w_{spl\_fb} \cdot D_{spl} + I_{current}$$

$$= w_{ref\_fb} \cdot I_{ref} + w_{spl\_fb} \cdot I_{spl} + \left(1 - w_{ref\_fb} - w_{spl\_fb}\right) I_{current}$$

REFERENCE_IMAGE[N] 362

$I_{fb}$

$I_{current}$

$D_{spl}$

$D_{ref}$

COMBINED OUTPUT WEIGHT MAPS 472

APPLY OUTPUT WEIGHTS **604**

$$I_{out} = w_{ref\_o} \cdot D_{ref} + w_{spl\_o} \cdot D_{spl} + I_{current}$$

$$= w_{ref\_o} \cdot I_{ref} + w_{spl\_o} \cdot I_{spl} + \left(1 - w_{ref\_o} - w_{spl\_o}\right) I_{current}$$

OUTPUT_IMAGE[N] 348

$I_{out}$

## FIG. 6

REGION 702

700

REGIONS 704

FIG. 7

FIG. 8

REGION PREVIOUSLY OCCLUDED BY MOVING OBJECT 904

900

MOVING SUBJECT 902

# FIG. 9

1000

DETERMINE A FIRST FEEDBACK WEIGHT MAP AND A FIRST OUTPUT WEIGHT MAP BASED ON A SEGMENTATION MAP 1002

GENERATE A REFERENCE IMAGE BASED ON AN INPUT IMAGE, A RETRIEVED REFERENCE IMAGE, AND A FIRST FEEDBACK WEIGHT MAP 1004

WRITING THE REFERENCE IMAGE TO A MEMORY 1006

GENERATE AN OUTPUT IMAGE BASED ON THE INPUT IMAGE, THE RETRIEVED REFERENCE IMAGE, AND THE FIRST OUTPUT WEIGHT MAP 1008

OUTPUTTING THE OUTPUT IMAGE TO A VIDEO APPLICATION FOR DISPLAY ON A DISPLAY DEVICE 1010

# FIG. 10

COMPUTING DEVICE 1100

MEMORY 1104

300

1000

CONTENT TRANSPARENCY CONTROL + TEMPORAL NOISE REDUCTION 380

BLEND USING COMBINED WEIGHT MAPS 408

PROCESSING DEVICE 1102

ANTENNA 1122

COMMUNICATION DEVICE 1112

DISPLAY DEVICE 1106

GPS DEVICE 1116

POWER SOURCE / POWER CIRCUITRY 1114

AUDIO OUTPUT DEVICE 1108

AUDIO INPUT DEVICE 1118

OTHER OUTPUT DEVICE 1110

OTHER INPUT DEVICE 1120

SENSOR 1130

FIG. 11

Europäisches
Patentamt
European
Patent Office
Office européen
des brevets

# EUROPEAN SEARCH REPORT

**Application Number**

EP 25 17 4377

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2023/290013 A1 (HSIEH REN-PAO [TW] ET AL) 14 September 2023 (2023-09-14)<br>* abstract *<br>* figure 6 *<br>* claim 1 *<br>* paragraphs [0004] - [0009] *<br>* paragraphs [0033] - [0044] *<br>----- | 1-14 | INV.<br>H04N7/14 |
| X | US 2021/135892 A1 (GHANAIE-SICHANIE ARASH [US] ET AL) 6 May 2021 (2021-05-06)<br>* abstract *<br>* figures 7A,7B *<br>* paragraphs *<br>----- | 1-14 | |
| X | US 2020/304713 A1 (ZHAO DAVID YUHENG [US] ET AL) 24 September 2020 (2020-09-24)<br>* abstract *<br>* figures 3A, 3B *<br>* paragraphs [0056] - [0073] *<br>----- | 1-14 | |
| | | | **TECHNICAL FIELDS SEARCHED (IPC)**<br><br>H04N |

The present search report has been drawn up for all claims

| Place of search | Date of completion of the search | Examiner |
|---|---|---|
| The Hague | 24 September 2025 | Naci, Suphi Umut |

EPO FORM 1503 03.82 (P04C01)

## ANNEX TO THE EUROPEAN SEARCH REPORT
## ON EUROPEAN PATENT APPLICATION NO.

**EP 25 17 4377**

This annex lists the patent family members relating to the patent documents cited in the above-mentioned European search report.
The members are as contained in the European Patent Office EDP file on
The European Patent Office is in no way liable for these particulars which are merely given for the purpose of information.

24-09-2025

| Patent document cited in search report | Publication date | Patent family member(s) | | Publication date |
|---|---|---|---|---|
| US 2023290013 A1 | 14-09-2023 | TW | 202336698 A | 16-09-2023 |
| | | US | 2023290013 A1 | 14-09-2023 |
| US 2021135892 A1 | 06-05-2021 | US | 2021135892 A1 | 06-05-2021 |
| | | WO | 2021086729 A1 | 06-05-2021 |
| US 2020304713 A1 | 24-09-2020 | US | 2020304713 A1 | 24-09-2020 |
| | | WO | 2020190547 A1 | 24-09-2020 |

EPO FORM P0459

For more details about this annex : see Official Journal of the European Patent Office, No. 12/82